# EUROPÄISCHE PATENTSCHRIFT

(11) **EP 3 648 987 B1**
(45) Veröffentlichungstag und Bekanntmachung des Hinweises auf die Patenterteilung: **08.09.2021**
(21) Anmeldenummer: 18738288.2
(22) Anmeldetag: 05.07.2018
(51) Int. Cl.: B60B 15/26, B60B 19/00, B60B 11/10

(54) **NOTLAUFRAD MIT SELBSTVERSPANNUNG**
SELF-BRACING EMERGENCY WHEEL
ROUE POUR ROULAGE À PLAT AVEC MÉCANISME D'AUTO-SERRAGE

(30) Priorität: 06.07.2017 DE 102017115184
(43) Veröffentlichungstag der Anmeldung: 13.05.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/068293
(87) Internationale Veröffentlichungsnummer: WO 2019/008113

(56) Entgegenhaltungen:
- EP-A1- 0 606 946
- EP-A1- 2 662 222
- GB-A- 857 897
- US-A- 1 055 372

## Beschreibung

Die vorliegende Erfindung betrifft einen Aufsatz für ein Fahrzeugrad zur Ermöglichung eines Fahrbetriebs bei eingeschränkter Reifenfunktion nach dem Oberbegriff des Anspruchs 1. Aus der EP 0 606 946 A1, der GB 857 897 A, der US 1,055,372 A und der EP 2 662 222 A1 ist jeweils ein solcher Aufsatz bekannt.

Mit einem Fahrzeugrad ist dabei ein Fahrzeugrad eines Kraftfahrzeugs gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte. Bevorzugtes Anwendungsgebiet der vorliegenden Erfindung ist die Ermöglichung einer Fahrt mit plattem Reifen.

Mit axialer Richtung ist vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise der Lochkreis mit der Mittenöffnung der Radnabe bzw. des Fahrzeugrades, wobei vorliegend unter dem Lochkreis des Fahrzeugrades die Anordnung der Schraubenöffnungen zur Einbringung der Befestigungsschrauben in die Radnabe samt Mittenöffnung gemeint ist. Mit Umfangsrichtung ist die Richtung entlang des Umfangs des Fahrzeugrades, also entlang seiner Lauffläche, gemeint.

Aufgabe der vorliegenden Erfindung ist es, einen Aufsatz für ein Fahrzeugrad bereitzustellen, der sich einfach und sicher montieren lässt, insbesondere soll der Aufsatz einer Fehlmontage vorbeugen.

Diese Aufgabe wird durch einen Aufsatz gemäß Anspruch 1 gelöst. Der erfindungsgemäße Aufsatz ist ein Aufsatz für ein Fahrzeugrad zur Ermöglichung eines Fahrbetriebs bei eingeschränkter Reifenfunktion mit einem Grundkörper, mit einer Lauffläche zur Kontaktierung einer Fahrbahn und mit wenigstens einem Spannmittel, das ausgebildet ist, um mit einem Hakabschnitt einen Abschnitt, insbesondere ein Felgenhorn, einer Felge des Fahrzeugrads zu hintergreifen, wobei der Aufsatz einen Verspannmechanismus mit einem Kontaktabschnitt umfasst, der ausgebildet ist, um das Spannmittel zu betätigen und den Hakabschnitt in Hintergriff mit dem Abschnitt der Felge, vorzugsweise dem Felgenhorn, zu bringen, wenn der Kontaktabschnitt, betätigt, insbesondere mit Druck beaufschlagt, wird.

Durch den Verspannmechanismus mit dem Kontaktabschnitt ist es möglich, dass die Spannmittel stets sicher und in reproduzierbarer Weise in Hintergriff mit dem Abschnitt der Felge bzw. dem Felgenhorn geführt werden. Der Eingriff der Spannmittel erfolgt quasi automatisiert und damit stets reproduzierbar. Der erfindungsgemäße Aufsatz wird hierzu zunächst am Fahrzeugrad angebracht. Dieses Anbringen kann beispielsweise über einen Spanngurt oder aber auch über eine gesonderte Anbringeinrichtung, auf die später noch im Detail eingegangen werden soll, erfolgen. Unter angebracht ist hierbei ein Zustand des Aufsatzes zu verstehen, in dem der Aufsatz zwar am Fahrzeugrad fixiert ist, der Aufsatz jedoch noch nicht derart befestigt ist, dass ein Fahrbetrieb auch bei hohen Geschwindigkeiten sicher möglich ist. Diese endgültige und für den Fahrbetrieb sichere Befestigung erfolgt durch den Hintergriff des Spannmittels bzw. der Spannmittel am Abschnitt der Felge bzw. am Felgenhorn. Das Hintergreifen des Abschnitts der Felge bzw. des Felgenhorns erfolgt quasi automatisch.

Erfindungsgemäß ist der Verspannmechanismus entweder dazu ausgebildet, mit dem Kontaktabschnitt bei am Fahrzeugrad angebrachtem Aufsatz und sich drehendem Fahrzeugrad die Fahrbahn zu kontaktieren und dadurch den Kontaktabschnitt zu betätigen, oder mit dem Kontaktabschnitt die Felge zu kontaktieren, wenn der Aufsatz am Fahrzeugrad angebracht wird, und dadurch den Kontaktabschnitt zu betätigen.

Beispielsweise kann der Kontaktabschnitt derart ausgebildet und angeordnet sein, dass dieser Hintergriff bei der ersten Drehung des Fahrzeugrades zustande kommt. Hierzu ist der Kontaktabschnitt, beispielsweise derart ausgebildet, dass er über die Lauffläche des Aufsatzes hinaus ragt, sodass wenn das Fahrzeugrad bei der ersten Umdrehung mit dem Kontaktabschnitt die Fahrbahn kontaktiert, der Kontaktabschnitt durch den Kontakt mit der Fahrbahn in den Aufsatz gedrückt wird und diese Kraft auf das Spannmittel übertragen wird, wodurch das Spannmittel betätigt und dabei auf die Felge, insbesondere das Felgenhorn, hin bewegt wird. Bei dieser Bewegung des Spannmittels auf die Felge bzw. das Felgenhorn hin, wird der Hakabschnitt in Hintergriff mit dem Abschnitt der Felge bzw. dem Felgenhorn gebracht. Der Kontaktabschnitt kann auch auf der der Felge zugewandten Seite des Aufsatzes angeordnet sein. Wird der Aufsatz dann gegen die Felge gespannt beispielsweise über den Spanngurt oder die Anbringeinrichtung, so wird der Kontaktabschnitt betätigt und damit das Spannmittel betätigt, sodass es in Hintergriff mit der Felge, insbesondere dem Felgenhorn, gelangt.

Optional kann der Verspannmechanismus so ausgebildet sein, dass der Kontaktabschnitt räumlich, insbesondere in axialer Richtung gesehen, in der Lauffläche des Aufsatzes angeordnet ist und vorzugsweise wobei der Kontaktabschnitt in einem ausgefahrenen Zustand in Umfangsrichtung absatzfrei mit der Lauffläche des Aufsatzes verläuft. Durch ein einfaches erstes Umdrehen des Fahrzeugrades bzw. des Aufsatzes gelangen die Spannmittel bei dieser Ausführungsform Hintergriff mit der Felge. Vorteilhafter Weise ist der Kontaktabschnitt derart ausgebildet und angeordnet, dass er, wenn er sich in seiner bereits betätigten Stellung bzw. eingefahrenen Stellung befindet, bündig mit der um ihn liegenden Lauffläche verläuft. Vorzugsweise umfasst der Aufsatz einen Anschlag, der ausgebildet ist um zu verhindern, dass der Kontaktabschnitt weiter als in eine bündig mit der Lauffläche abschließende Stellung nach radial innen bewegbar ist.

Optional kann der Verspannmechanismus ausgebildet sein, um mit dem Kontaktabschnitt die Felge zu kontaktieren, wenn der Aufsatz am Fahrzeugrad angebracht wird bzw. ist, und dadurch den Kontaktabschnitt zu betätigen, insbesondere mit Druck zu beaufschlagen, vorzugsweise wobei der Kontaktabschnitt auf der der Felge zugewandten Seite des Aufsatzes angeordnet ist. Hierdurch kann der Aufsatz beispielsweise mit dem Spanngurt an der Felge angebracht werden und beim fest ziehen des Spanngurts werden automatisch die Kontaktabschnitte betätigt und die Spannmittel gelangen über Betätigung durch den Kontaktabschnitt in Hintergriff mit der Felge. Der Aufsatz kann auch derart ausgeführt sein, dass er bspw. über die Anbringeinrichtung lose am Fahrzeugrad angebracht wird und dann händisch derart gegen das Fahrzeugrad gedrückt werden kann, dass die Kontaktabschnitte die Felge bzw. das Fahrzeugrad kontaktieren und dadurch betätigt werden und die Spannmittel dann in Hintergriff mit der Felge gelangen. Der Verspannmechanismus kann auf verschiedene Arten ausgeführt sein. Der Verspannmechanismus kann eine mechanische Kopplung, beispielsweise in Form eines Kraftübertragungselements, zwischen Kontaktabschnitt und Spannmittel aufweisen. Der Verspannmechanismus kann aber auch derart ausgebildet sein, dass, wenn der Kontaktabschnitt die Fahrbahn kontaktiert, das oder die Spannmittel pneumatisch betätigt bzw. bewegt werden. Für eine derartige Ausführungsform umfasst der Aufsatz vorzugsweise ein Druckmittelreservoir über das die Spannmittel mit Druckmittel beaufschlagbar sind. Denkbar ist auch, dass die Spannmittel elektrisch oder elektromechanisch bewegt werden, wenn der Kontaktabschnitt die Fahrbahn kontaktiert. Möglich ist auch eine magnetische Bewegung der Spannmittel. Bevorzugt ist, wenn die Spannmittel mechanisch betätigt bzw. bewegt werden, wenn der Kontaktabschnitt die Fahrbahn kontaktiert, insbesondere wenn der Verspannmechanismus derart ausgebildet ist, dass die Bewegung des Kontaktabschnitt nach radial innen bei Kontaktierung der Fahrbahn mechanisch gekoppelt auf das oder die Spannmittel übertragen wird.

Bevorzugt ist, wenn der Verspannmechanismus derart in dem Aufsatz integriert ist, dass er bei am Fahrzeugrad befestigtem Aufsatz an diesem verbleibt. Alternativ kann der Spannmechanismus auch abnehmbar ausgebildet sein. Hierzu kann der Verspannmechanismus in einem abnehmbaren Gehäuse angeordnet sein.

Bevorzugterweise ist der Kontaktabschnitt in die Lauffläche des Aufsatzes integriert also räumlich in der Lauffläche des Absatzes angeordnet. Insbesondere ist bevorzugt, wenn er in axialer Richtung gesehen innerhalb der Lauffläche angeordnet ist, wenn er also innerhalb der axialen Erstreckung der Lauffläche angeordnet ist. Hierdurch kann der Kontaktabschnitt derart angeordnet und ausgebildet sein, dass er nach der ersten Umdrehung des Aufsatzes quasi vollständig in der Lauffläche abgesenkt und integriert ist.

Bevorzugt ist auch, wenn der Verspannmechanismus eine Freilaufeinrichtung umfasst, wobei die Freilaufeinrichtung ausgebildet ist, um eine freie Bewegung, insbesondere nach radial innen oder nach axial von der Felge weg, des Kontaktabschnitts zu ermöglichen, wenn der Hakabschnitt in Hintergriff mit dem Abschnitt der Felge, insbesondere dem Felgenhorn, steht. Mit einer freien Bewegung des Kontaktabschnitts ist dabei eine Bewegung des Kontaktabschnitts unabhängig von der Bewegung des Spannmittels gemeint. Hierdurch ist es möglich, die Bewegung des Spannmittels bzw. des Hakabschnitts derart zu begrenzen, dass der Hakabschnitt den Abschnitt der Felge sicher kontaktiert und hintergreift und der Kontaktabschnitt dann unabhängig vom Spannmittel radial einwärts bewegbar ist. Hierdurch wird sichergestellt, dass der Aufsatz stets sicher an der Felge befestigt ist und der Kontaktabschnitt dennoch stets vollständig in die Lauffläche hinein bewegt werden kann. Der Kontaktabschnitt ist also unabhängig von dem Spannmittel bewegbar. Hierdurch wird zuverlässig sichergestellt, dass das Spannmittel, wenn es im Hintergriff mit dem Felgenhorn steht, nicht derart gegen das Felgenhorn gepresst wird, dass dieses beschädigt wird. Bei in der Lauffläche angeordneten Kontaktabschnitt wird bei dieser Ausführungsform, wenn das Fahrzeugrad abrollt und der Kontaktabschnitt in Kontakt mit der Fahrbahn kommt, das Spannmittel also nur so lange zur Felge beziehungsweise zum Felgenhorn hin bewegt, bis das Spannmittel sicher in Eingriff mit der Felge steht bzw. sein Hakabschnitt in Hintergriff mit der Felge bzw. dem Felgenhorn steht. Dann bietet das bspw. am Felgenhorn anliegende Spannmittel derart viel Widerstand gegen eine weitere Bewegung, dass die Freilaufeinrichtung aktiviert wird und der Kontaktabschnitt sich bewegen kann, ohne dass sich das Spannmittel weiter zur Felge hin bewegt. Eine derartige Freilaufeinrichtung kann beispielsweise über ein nachgiebiges Element realisiert sein, das sich beispielsweise ab einer bestimmten Gegenkraft elastisch biegt und/oder komprimiert und kraftübertragend zwischen Spannmittel und Kontaktabschnitt angeordnet ist. Denkbar ist auch ein nachgiebiges Element, das anstatt elastisch zu sein plastisch biegbar und/oder komprimierbar ist. Denkbar ist ebenso eine Ausführungsform der Freilaufeinrichtung, bei der diese einen Druckzylinder umfasst, der kraftübertragend zwischen Spannmittel und Kontaktabschnitt angeordnet ist und ab einem Schwellendruck eingefahren wird, sich also in seiner Länge reduziert anstatt das Spannmittel weiter zur Felge hin zu bewegen. Denkbar ist auch die Ausführung der Freilaufeinrichtung durch eine Federung oder Federlagerung des Spannmittels bspw. gegenüber einem Druckübertragungselement, dabei kann diese Federung oder Federlagerung derart ausgeführt sein, dass das Spannmittel so lange über das Druckübertragungselement bewegbar ist, bis eine Grenzkraft der Federung überschritten ist und das Druckübertragungselement die Federung bzw. eine dazu gehörige Feder komprimiert anstatt das Spannmittel zu bewegen.

Optional ist der Verspannmechanismus derart ausgebildet, dass das Spannmittel gegen den Abschnitt der Felge vorgespannt, insbesondere federvorgespannt, ist und durch ein Rückhalteelement gehalten ist, das das Spannmittel freigibt, wenn der Kontaktabschnitt die Fahrbahn kontaktiert, sodass das Spannmittel sich aufgrund der Vorspannung auf die Felge, insbesondere den Abschnitt der Felge, hin bewegt, insbesondere der Hakabschnitt den Abschnitt der Felge hintergreift. Eine Vorspannung des Spannmittels stellt sicher, dass das Spannmittel stets mit einer vordefinierten Kraft die Felge bzw. den Abschnitt der Felge kontaktieren kann, wodurch ein genau definierter Hintergriff des Abschnitts der Felge bzw. Felgenhorns gewährleistet ist.

Optional ist das Spannmittel über eine Druckbegrenzungseinrichtung, die ausgebildet ist, um einen Druck mit dem das Spannmittel zur Felge hin gedrängt wird und/oder mit der das Spannmittel die Felge kontaktiert auf einen Grenzdruck begrenzt, mit dem Verspannmechanismus gekoppelt. Beispielsweise kann eine derartige Druckbegrenzungseinrichtung in Form einer Feder ausgeführt sein, die ab Überschreiten des Grenzdrucks eine weitere Bewegung des Spannmittels verhindert, wodurch Beschädigungen der Felge des Aufsatzes durch ungewünscht starkes Andrücken der Spannmittel zuverlässig verhindert werden können.

Optional ist auch möglich, wenn der Kontaktabschnitt in einem ausgefahrenen Zustand absatzfrei mit der Lauffläche des Aufsatzes verläuft. Mit einem ausgefahrenen Zustand ist dabei der Zustand gemeint, bevor der Kontaktabschnitt in Kontakt mit der Fahrbahn gekommen ist und das Spannmittel in Richtung der Felge bewegt hat. Bei dieser Ausführungsform kann der Kontaktabschnitt beispielsweise eine Erhebung bzw. eine Art Beule auf der Lauffläche des Aufsatzes bilden. Beispielsweise kann dies dadurch realisiert werden, dass ein etwaiger Laufflächenkörper, der die Lauffläche bildet durch ein biegsames Federstahlblech lokal angehoben wird, sodass sich ein absatzfreier bzw. kontinuierlicher Verlauf des Laufflächenkörpers bzw. der Lauffläche ergibt. Rollt der Kontaktabschnitt, der bei dieser Ausführungsform den abgehobenen Teil des Laufflächenkörpers umfasst, auf der Fahrbahn ab, so wird er nach radial innen gedrängt.

Optional ist auch möglich, wenn der Verspannmechanismus einen Haltemechanismus umfasst, der ausgebildet ist, um das Spannmittel in seiner Position zu halten, wenn das Spannmittel mit seinem Hakabschnitt in Hintergriff mit dem Abschnitt der Felge bzw. mit dem Felgenhorn steht. Dabei ist bevorzugt, wenn der Haltemechanismus nur mittels eines Werkzeugs aus seinem haltenden Zustand lösbar ist. Hierdurch wird stets sichergestellt, dass das Spannmittel in seiner Hintergriffstellung mit der Felge bzw. dem Felgenhorn verbleibt.

Bevorzugt ist auch, wenn das Spannmittel einen maximalen Verfahrweg aufweist, der mehr als einen Zoll beträgt. Dabei ist mit dem maximalen Verfahrweg die maximale Wegstrecke gemeint, die das Spannmittel in radialer Richtung zurücklegen kann. Damit ist der Aufsatz für verschiedene Felgengrößen, beispielsweise 17 Zoll und 19 Zoll Felgen, verwendbar. Vorteilhafterweise kann die über den Kontaktabschnitt eingeleitete Bewegung den gesamten maximalen Verfahrweg des Spannmittels umfassen.

Von Vorteil ist auch, wenn der Verspannmechanismus eine Übersetzungseinrichtung umfasst, die ausgebildet ist, um eine Bewegung des Kontaktabschnitts in eine streckenmäßig andere, vorzugsweise größere, Bewegung des Spannmittels zu übersetzen. Hierdurch wird es ermöglicht, dass ein eine kleine Bewegung des Kontaktabschnitts eine ausreichend große Bewegung des Spannmittels ermöglicht. Hierdurch kann der Kontaktabschnitt quasi als "kleine Erhebung" auf der Lauffläche des Aufsatzes ausgebildet sein und dennoch zur Betätigung des Spannmittels über große Wegstrecken ausreichen.

Bevorzugt ist das Spannmittel flexibel in wenigstens zwei, vorzugsweise radial, versetzten Größenpositionen positionierbar, wobei das Spannmittel in jeder der versetzt angeordneten Größenpositionen über den Kontaktabschnitt betätigbeziehungsweise bewegbar ist. Das Spannmittel kann hierzu also in verschiedenen, auf die Größe der Felge abgestimmten Positionen, den Größenpositionen, über den Kontaktabschnitt betätigt bzw. bewegt werden.

Vorzugsweise ist eine Bewegung des Spannmittels beim Hintergreifen der Felge eine translatorische nach radial innen gerichtete Bewegung oder eine nach radial innen gerichtete Schwenkbewegung.

Optional umfasst der Aufsatz ein erstes umfängliches Segment, vorzugsweise mit einer umfänglichen Erstreckung von mehr als 180°, insbesondere von mehr als 190°, und ein zweites umfängliches Segment, wobei das zweite umfängliche Segment mit dem ersten umfänglichen Segment lösbar oder verschwenkbar oder verschieblich verbunden ist. Hierdurch lässt sich der Aufsatz besonders einfach am Fahrzeugrad anbringen. Beispielsweise, wenn die beiden Segmente gegenüber einander verschwenkbar sind, so kann bei der Montage zunächst das zweite umfängliche Segment auf das erste umfängliche Segment geschwenkt bleiben, wenn das erste umfängliche Segment am Fahrzeugrad angebracht ist, so können die Kontaktabschnitte am ersten umfänglichen Segment betätigt werden und dessen Spannmittel die Felge hintergreifen. Bspw. kann das Fahrzeugrad bewegt werden, sodass das erste umfängliche Segment mit seiner Lauffläche in Kontakt mit der Fahrbahn gelangt und die ggf. darauf angeordneten Kontaktabschnitte werden betätigt. Das zweite umfängliche Segment kann anschließend in einfacher Weise nach oben geschwenkt werden und vorzugsweise über einen Verriegelungsmechanismus in der für den Betrieb vorgesehenen Stellung verriegelt werden. Das Fahrzeug kann nun weiter bewegt werden, wobei sich das Fahrzeugrad mit dem daran befestigten Aufsatz dreht, wodurch die Kontaktabschnitte am zweiten umfänglichen Segment in Kontakt mit der Fahrbahn treten und jeweilige Spannmittel betätigen bzw. zur Felge hin bewegen und diese in Hintergriff mit der Felge beziehungsweise dem Abschnitt der Felge, insbesondere dem Felgenhorn, bringen.

Die umfängliche Erstreckung des ersten umfänglichen Segments von mehr als 180° bzw. mehr als 190° hat den Vorteil, dass das erste umfängliche Segment den überwiegenden Teil des Aufsatzes in umfänglicher Richtung bildet und damit in einfacher Weise stabil und fest am Fahrzeugrad angebracht werden kann. Insbesondere kann das erste umfängliche Segment kreisbogenartig ausgebildet sein und vorzugsweise eine kreissehnenartig verlaufende Strebe umfassen. Hierdurch ist eine besonders hohe Stabilität und einfache Anbringung des Aufsatzes am Fahrzeugrad gegeben. Ein derartiger Aufsatz mit einem ersten umfänglichen Segment und einem zweiten umfänglichen Segment kann auch Kontaktabschnitte umfassen, die der Felge zugewandt angeordnet sind.

Optional umfasst der Grundkörper einen in umfänglicher Richtung geschlossen ausgebildeten Montageabschnitt und einen Laufflächenabschnitt, wobei der Laufflächenabschnitt in umfänglicher Richtung mit einer Unterbrechung ausgebildet ist und einen in der Unterbrechung aufnehmbaren Einsatzabschnitt umfasst, der in der Unterbrechung derart aufnehmbar ist, dass der Laufflächenabschnitt die Lauffläche bildet. Vorzugsweise ist das bzw. sind die Spannmittel im Bereich des Montageabschnitts angeordnet, während der Laufflächenabschnitt die Lauffläche umfasst.

Da der Laufflächenabschnitt die Unterbrechung in umfänglicher Richtung aufweist, ist es möglich den Montageabschnitt und den Laufflächenabschnitt am Fahrzeugrad zu anzubringen und/oder zu befestigen ohne das Fahrzeugrad vom Fahrzeug zu entfernen oder das Fahrzeug mit einem Wagenheber anzuheben. Hierzu wird einfach die Unterbrechung zum Boden hin ausgerichtet und die Montage vorgenommen.

Wenn der Montageabschnitt und der Laufflächenabschnitt am Fahrzeugrad angebracht oder befestigt sind, kann das Fahrzeug geringfügig bewegt werden. Die Unterbrechung bewegt sich dann, durch die Drehung des Fahrzeugrades, von der Ausrichtung zum Boden hin weg. Beispielsweise kann das Fahrzeug um eine halbe Drehung des Fahrzeugrads nach vorn bewegt werden, die Unterbrechung ist dann nicht mehr zum Boden hin ausgerichtet, sondern zeigt nach oben. Nun kann der Einsatzabschnitt in die Unterbrechung eingesetzt bzw. aufgenommen werden. Der Aufsatz weist dann eine in umfänglicher Richtung geschlossene kreisförmige Lauffläche auf. Die Montage des Aufsatzes ist dann abgeschlossen und das Fahrzeug ist fahrbereit. Durch den Verspannmechanismus und das bzw. die zugehörige(n) Spannmittel ist die Befestigung des Aufsatzes am Fahrzeugrad quasi automatisiert sichergestellt.

Von Vorteil ist, wenn der Einsatzabschnitt von dem Laufflächenabschnitt lösbar ist und/oder verschwenkbar oder verschiebbar mit dem Laufflächenabschnitt verbunden ist. Der Einsatzabschnitt kann also beispielsweise einfach abnehmbar ausgeführt sein bzw. lösbar mit dem Laufflächenabschnitt verbindbar sein. Der Einsatzabschnitt kann über ein lösbares oder ein unlösbares Schwenkgelenk mit dem Laufflächenabschnitt verbunden bzw. verbindbar sein. Oder er kann verschieblich (lösbar oder unlösbar) gegenüber dem Laufflächenabschnitt ausgebildet bzw. befestigt sein.

Vorteilhafterweise erstreckt sich die Unterbrechung wenigstens über 1/8, vorzugsweise wenigstens über 1/6, vorzugsweise wenigstens über 1/4, der umfänglichen Erstreckung des Laufflächenabschnitts. Damit ist sichergestellt, dass genügend Freiraum besteht, um den Aufsatz am Fahrzeugrad zu befestigen, ohne das Fahrzeugrad abzunehmen oder das Fahrzeug durch einen Wagenheber anheben zu müssen.

Bevorzugt ist auch, wenn die Unterbrechung sich höchstens über die Hälfte, vorzugsweise höchstens über 1/3, der umfänglichen Erstreckung des Laufflächenabschnitts erstreckt. Hierdurch kann durch ein einfaches Verdrehen des Rades die Unterbrechung derartig vom Boden weg bewegt werden, dass der Einsatzabschnitt in einfacher Weise in den Laufflächenabschnitt aufgenommen bzw. eingefügt, eingeklappt oder eingeschoben werden kann.

Bevorzugt ist auch, wenn der Laufflächenabschnitt einstückig mit dem Montageabschnitt ausgebildet ist. Hierdurch wird der gesamte Aufsatz besonders robust und einfach zu handhaben.

Bevorzugt ist auch, wenn der Laufflächenabschnitt von dem Montageabschnitt lösbar ist. Hierdurch wird der Aufsatz in einfacher Weise verstaubar und kann besonders kompakt gelagert werden.

Bevorzugt ist auch, wenn der Montageabschnitt zerlegbar oder klappbar ist. Hierdurch wird eine kompakte Lagerung des Aufsatzes, bspw. im Handschuhfach eines Fahrzeugs, möglich.

Bevorzugt ist auch, wenn der Montageabschnitt starr und unzerlegbar ist. Hierdurch wird der Aufsatz besonders einfach handhabbar und er weist eine hohe Stabilität auf.

Optional umfasst der Aufsatz eine Anbringeinrichtung, die ausgebildet ist, um den Aufsatz am Fahrzeugrad auszurichten und derart anzubringen, dass der Aufsatz anschließend durch eine Bewegung des Fahrzeugs mittels der über den Kontaktabschnitt betätigbaren Spannmittel am Fahrzeugrad befestigbar ist. Beispielsweise kann die vorhin genannte kreissehnenartig verlaufende Strebe Schraubenöffnungen umfassen, mit denen sie über eine Schraube am Lochkreis des Fahrzeugrades angebracht werden kann. Denkbar ist auch eine Anbringung an der Mittenöffnung des Fahrzeugrades. Der Aufsatz kann auch Verschlüsse aufweisen, die zum hintergreifen von Felgenspeichen der Felge ausgebildet sind. Derartige Verschlüsse können bspw. am der eben genannten Strebe vorgesehen sein, um ein einfaches Anbringen am Fahrzeugrad zu ermöglichen.

Bevorzugt ist die Anbringeinrichtung ausgebildet, um den Aufsatz im Bereich des Lochkreises des Fahrzeugrads anzubringen, vorzugsweise wobei die Anbringeinrichtung ein Eingriffselement umfasst, das ausgebildet ist, um einen Abschnitt, vorzugsweise eine Nut, einer Mittenöffnung formschlüssig zu hintergreifen, und/oder eine Schraubverbindung umfasst, die ausgebildet ist, um den Aufsatz an dem Lochkreis zu befestigen, und/oder eine Einrichtung zum Hintergriff einer Speiche der Felge umfasst.

Optional umfasst die Anbringeinrichtung (54) eine Einrichtung zum klemmenden und/oder hintergreifenden Erfassen einer herkömmlichen Radschraube umfasst, vorzugsweise wobei die Einrichtung eine Klemmhaube mit wenigstens zwei Klemmarmen umfasst und eine Klemmhülse, die wenn sie auf die Klemmhaube aufgeschoben wird, die Klemmarme derart aufeinander zu spannt, dass ein Kopf einer Radschraube durch die Klemmarme greifbar ist, umfasst und einen Bolzen, mit dem die Klemmhülse gegen die Klemmhaube spannbar ist, umfasst.

Bevorzugt ist auch, wenn der Aufsatz mehrere, vorzugsweise in einer Umfangrichtung verteilt angeordnete, Spannmittel umfasst, vorzugsweise wobei der Aufsatz entweder mehrere Kontaktabschnitte umfasst, die jeweils zur Betätigung eines Spannmittels ausgebildet sind, oder ein Kontaktabschnitt zur Betätigung mehrerer Spannmittel ausgebildet ist. Hierdurch wird eine sichere Befestigung um den gesamten Umfang des Aufsatzes gewährleistet.

Bevorzugt ist auch, wenn der Hakabschnitt des Spannmittels in axialer Richtung gesehen nach radial innen, vorzugsweise linear oder bogenförmig, abfallend ausgebildet ist, wobei das Spannmittel derart ausgebildet ist, dass sich der Hakabschnitt nach radial innen bewegt, insbesondere verschiebt, wenn das Spannmittel über den Kontaktabschnitt betätigt wird und das Spannmittel sich auf die Felge, insbesondere auf das Felgenhorn, zubewegt, und dass durch die Bewegung des Hakabschnitts der Aufsatz in axialer Richtung zur Felge hin gedrängt wird. Hierdurch wird beim Hintergriff der Spannmittel bzw. des Spannmittels an der Felge gewährleistet, dass dieses nicht nur in radialer Richtung gegenüber der Felge fest positioniert ist, sondern der gesamte Aufsatz wird bei Betätigung der Spannmittel auch gegen das Fahrzeugrad gedrängt, sodass er an diesem anliegt, was die Stabilität der Befestigung erhöht.

Vorzugsweise weist das Spannmittel im Bereich des Hakabschnitts eine elastisch nachgiebige Oberfläche auf. Hierdurch kann eine Beschädigung der Felge zuverlässig vermieden werden.

Vorzugsweise weist der Aufsatz im Bereich der für die Kontaktierung der Felge vorgesehen ist eine elastisch nachgiebige Oberfläche auf. Hierdurch kann eine Beschädigung der Felge zuverlässig vermieden werden.

Vorzugsweise ist ein Laufflächenkörper am äußeren Umfang des Aufsatzes angeordnet und vorzugsweise formschlüssig, insbesondere über einen formschlüssigen Hintergriff, gehalten. Hierdurch kann der Laufflächenkörper in einfacher Weise einfach und sicher an dem Aufsatz befestigt werden.

Vorzugsweise ist der Laufflächenkörper aus einem elastischen Gummimaterial bzw. Polymermaterial gebildet. Die formschlüssige Halterung, bzw. der formschlüssige Hintergriff, des Laufflächenkörpers kann durch eine schwalbenschwanzförmige Rinne ausgeführt sein, wobei der Laufflächenkörper einen entsprechenden komplementär zu dieser Rinne ausgebildeten Abschnitt aufweist der in dieser Rinne formschlüssig aufnehmbar ist.

Vorteilhaft ist auch, wenn der Laufflächenkörper stoßdämpfend ausgebildet ist, vorzugsweise wobei der Laufflächenkörper aus einem elastisch federnden Material gebildet ist und/oder eine elastisch federnde Struktur aufweist, insbesondere eine Hohlräume und/oder Löcher umfassende Struktur aufweist. Hierdurch kann der Laufflächenkörper Fahrbahnunebenheiten vorteilhaft abfedern. Denkbar ist jedoch auch ein luftgefüllter Laufflächenkörper ähnlich eines Reifens. Denkbar ist ein Laufflächenkörper aus einem Polymermaterial mit im Wesentlichen in axialer Richtung verlaufenden Durchbrüchen, welche zu einer elastisch dämpfenden Eigenschaft des Laufflächenkörpers führen. Denkbar sind jedoch auch andere Strukturen des Laufflächenkörpers, die zu den federnden Eigenschaften führen, insbesondere sind hierzu Hohlräume, die geschlossen oder offen sein können, im Laufflächenkörper denkbar.

Es kann vorteilhaft sein, wenn der Grundkörper Durchbrüche aufweist. Diese Durchbrüche können zum einen dazu dienen das Gewicht des Grundkörpers und damit des Aufsatzes zu reduzieren. Zum anderen können diese Durchbrüche dazu dienen, dass der Aufsatz in einfacher Weise zusammenklappbar oder zusammenlegbar ist. In zusammengeklapptem oder zusammengelegtem Zustand kann vorzugsweise wenigstens ein von der Oberfläche des Grundkörpers abstehendes Element in einen derartigen Durchbruch hineinragen.

Optional ist, wenn der Aufsatz eine Reifenverdrängeinrichtung umfasst, die ausgebildet ist, um den Reifen beim Anbringen des Aufsatzes und/oder beim Betätigen des Spannmittels in axialer Richtung vom Felgenhorn weg zu drängen, vorzugsweise wobei mehreren Spannmitteln jeweils eine Reifenverdrängeinrichtung zugeordnet ist. Hierdurch gestaltet sich das sicher hintergreifen des Felgenhorns durch die Spannmittel einfacher, da der Reifen vom Felgenhorn abgehoben wird.

Optional ist, wenn die Reifenverdrängeinrichtung gesondert von dem Spannmittel ausgebildet ist. Die Reifenverdrängeinrichtung kann beispielsweise ein in Umfangsrichtung neben dem Spannmittel angeordneter Vorsprung sein hierdurch bleibt die Bewegung des Spannmittels frei, auch wenn die Reifenverdrängeinrichtung am Reifen anliegt und diesen mit von dem Felgenhorn wegdrückt.

Optional ist, wenn die Reifenverdrängeinrichtung einen Vorsprung, vorzugsweise zwei Vorsprünge, umfasst, der in axialer Richtung von der der Felge zugewandten Seite des Aufsatzes abragt und insbesondere stab- oder bogenartig ausgebildet ist. Dies stellt eine einfache Ausführungsvariante dabei der die Reifenverdrängeinrichtung beim Spannen gegen die Felge den Reifen sicher vom Felgenhorn weg drängt bzw. abhebt.

Optional ist, wenn der Vorsprung derart ausgebildet ist, dass er sich beim oder nach dem Hintergreifen des Abschnitts der Felge, vorzugsweise des Felgenhorns, durch das Spannmittel von dem Reifen wegbewegt. Die Vorsprünge können beispielsweise derart mit dem Spannmittel gekoppelt sein, dass sie, sobald das Spannmittel in Hintergriff mit der Felge bzw. dem Felgenhorn steht zurückgezogen werden und der Reifen freigegeben wird, sodass dieser das Spannmittel gegen das Felgenhorn drängt. Das Spannmittel wird hierdurch zusätzlich in seinem Hintergriff gesichert.

Beschrieben wird auch ein Aufsatz, welcher nicht zur beanspruchten Erfindung gehört, bei dem statt dem Verspannmechanismus mit dem Kontaktabschnitt eine Betätigungseinrichtung für das oder die Spannmittel vorgesehen ist, mit der das Spannmittel in Hintergriff mit dem Abschnitt der Felge, vorzugsweise dem Felgenhorn bringbar ist. Vorzugsweise ist die Betätigungseinrichtung in Form eines Hebelmechanismus, der beispielsweise manuell bedienbar sein kann, ausgebildet.

Möglich, aber nicht zum Umfang der beanspruchten Erfindung gehörend ist, wenn das oder die Spannmittel eine Ansatzeinrichtung aufweisen, über die ein Hebel an das Spannmittel angesetzt werden kann, sodass das Spannmittel über diesen Hebel auf den Abschnitt der Felge, vorzugsweise das Felgenhorn, bewegbar oder schwenkbar ist. Ein derartiger Hebel kann die eben genannte Betätigungseinrichtung bilden.

Weiterhin nicht zum Umfang der beanspruchten Erfindung gehörend ist ein System aus einer Fahrzeugfelge und einem Aufsatz, wobei die Fahrzeugfelge eine speziell vorgesehene Hintergriffsposition aufweist, die ausgebildet ist, um das Spannmittel des Aufsatzes in seiner Hintergriffstellung aufzunehmen.

Optional weist wenigstens eines der Spannmittel eine Sensoreinrichtung auf, die erfasst, wenn das Spannmittel in dem gewünschten Hintergriff mit dem Felgenhorn bzw. der Felge steht. Die Sensoreinrichtung kann mit einer Signaleinrichtung gekoppelt sein, die ein Signal abgibt über das der Fahrzeugführer erkennen kann, dass der Aufsatz in der vorgesehenen Position am Fahrzeugrad befestigt ist, die Spannmittel also im gewünschten Hintergriff mit der Felge bzw. dem Felgenhorn stehen. Die Signaleinrichtung kann dabei beispielsweise Fahrgastraum angeordnet sein. Die Signaleinrichtung kann jedoch auch am Aufsatz selbst angeordnet sein. Das entsprechende Signal kann beispielsweise optisch, akustisch oder haptisch abgegeben werden.

Der Aufsatz kann auch eine Einrichtung umfassen, die erkennt, wenn das Fahrzeugrad eine vollständige Drehung zurückgelegt hat, sodass alle Kontaktabschnitte, die in der Lauffläche angeordnet sind, Fahrbahn kontaktiert haben bzw. haben sollten. Dem Fahrzeugführer kann dann angezeigt werden, ob die Spannmittel die Felge ordnungsgemäß hintergreifen.

Vorteilhafterweise wird der erfindungsgemäße Aufsatz mit einem Fahrzeug mit Reifendrucksensor kombiniert.

Ein typischer Ablauf kann beispielsweise wie folgt sein: Ein schadhafter Reifen wird über den geringen Druck durch einen Reifendrucksensor erkannt.

Nach Fahrzeugstillstand und anschließendem Anbringen eines Aufsatzes bzw. des ersten umfänglichen Segments oder des Montageabschnitts, wird die Ausgangsposition des betroffenen Fahrzeugrades festgehalten.

Beim Anfahren, zur Positionierung des zweiten umfänglichen Segments, wird vorzugsweise über den Drehzahlsensor eine halbe Radumdrehung ermittelt und durch ein, vorzugsweise optisches und/oder akustisches, Signal dem Fahrzeugführer mitgeteilt. Die Kontaktabschnitte des ersten umfänglichen Segments haben dann die Fahrbahn F kontaktiert und die Spannmittel sind im Hintergriff mit dem Felgenhorn.

Im Anschluss daran kann dann die Montage des Aufsatzes abgeschlossen werden, indem das zweite umfängliche Segment in seine endgültige Position gebracht wird und das Fahrzeug weiter gefahren wird, sodass auch dessen Kontaktabschnitte mit der Fahrbahn in Kontakt kommen.

Über Sensoreinrichtungen wird der korrekte Hintergriff der Spannmittel erfasst und ein entsprechendes Signal an den Fahrzeugführer abgegeben.

Der Abschnitt der Felge der von den Spannmitteln beim Befestigen hintergriffen wird kann in oder zwischen den Speichen der Felge ausgebildet sein.

Möglich, aber nicht Teil der vorliegenden Erfindung ist auch ein System aus einem Aufsatz nach einer oder mehreren der in dieser Anmeldung beschriebenen Ausführungsformen und zwei Felgen, wobei die Felgen unterschiedliche Größen aufweisen, wobei an den Felgen jeweils ein Abschnitt vorgesehen ist, der ausgebildet ist, um durch die Spannmittel des Aufsatzes hintergriffen zu werden, wobei die Abschnitte der Felgen bezüglich der jeweiligen Rotationsachsen der Felgen bei beiden Felgen den gleichen Abstand haben. Hierdurch kann ein Aufsatz mit einer festen Position der Spannmittel für unterschiedliche Felgen verwendet werden, bspw. für Winter sowie für Sommerreifen.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: ein Fahrzeugrad beim Blick in einer axialen Richtung;
- Figur 2: eine Schnittdarstellung der Felge des Fahrzeugrads aus Figur 1;
- Figur 3: eine erste Ausführungsform eines erfindungsgemäßen Aufsatzes;
- Figur 4: eine weitere Ausführungsform eines erfindungsgemäßen Aufsatzes;
- Figur 5: die Ausführungsform aus Figur 4 in eingeklapptem Zustand;
- Figur 6: ein Teil einer weiteren Ausführungsform in einer Schnittdarstellung;
- Figur 7: weitere Ausführungsformen in einer schematischen Darstellung;
- Figur 8: eine Prinzipskizze der Betätigung eines Spannmittels;
- Figur 9: eine alternative Ausgestaltung des Spannmittels und des Verspannmechanismuss;
- Figur 10: eine weitere alternative Ausgestaltung des Spannmittels und des Verspannmechanismuss;
- Figur 11: eine weitere alternative Ausgestaltung des Spannmittels und des Verspannmechanismuss;
- Figur 12: eine weitere alternative Ausgestaltung des Spannmittels und des Verspannmechanismuss;
- Figur 13: eine weitere Ausführungsform eines erfindungsgemäßen Aufsatzes;
- Figur 14: eine weitere Ausführungsform eines erfindungsgemäßen Aufsatzes;
- Figur 15: ein Detail des Aufsatzes aus Figur 14 in einer Schnittdarstellung;
- Figur 16: ein Detail des Aufsatzes aus Figur 14 in einer Schnittdarstellung bei Anbringung am Fahrzeugrad;
- Figur 17: eine weitere alternative Ausgestaltung des Spannmittels und des Verspannmechanismuss;
- Figur 18: eine weitere Ausführungsform eines erfindungsgemäßen Aufsatzes;
- Figur 19: eine Ablaufskizze der Befestigung eines Aufsatzes an einem Fahrzeugrad;
- Figur 20: eine Einrichtung zum klemmenden Erfassen einer herkömmlichen Radschraube;
- Figur 21: eine weitere Einrichtung zum klemmenden Erfassen einer herkömmlichen Radschraube;
- Figur 22: eine Einrichtung zum hintergreifenden Erfassen einer Radschraube;

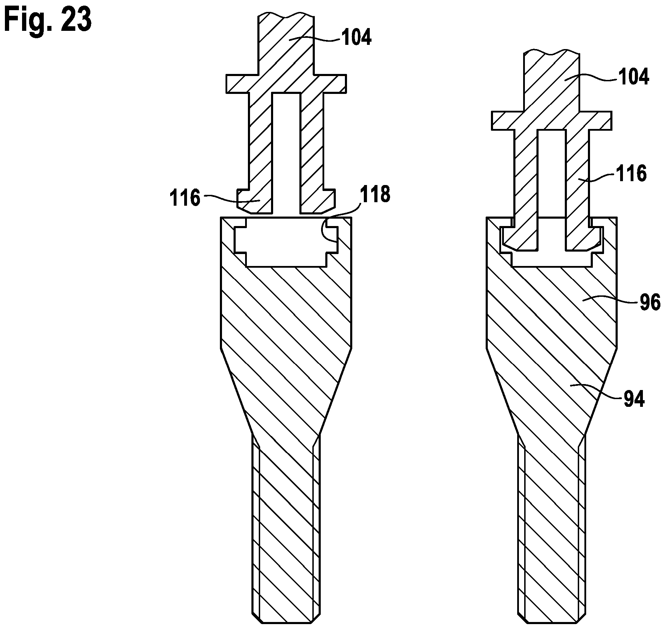

- Figur 23: eine weitere Einrichtung zum hintergreifenden Erfassen einer Radschraube;
- Figur 24: ein Verspannmechanismus mit Spannmittel;
- Figur 25: eine weitere Ausführungsform eines erfindungsgemäßen Aufsatzes mit variabel positionierbaren Spannmitteln;
- Figur 26: eine weitere Ausführungsform eines erfindungsgemäßen Aufsatzes der mittels Spezialschrauben am Fahrzeugrad angebracht ist;
- Figur 27: eine weitere Ausführungsform eines erfindungsgemäßen Aufsatzes;
- Figur 28: eine Ausführungsform eines nicht erfindungsgemäßen Aufsatzes; und
- Figur 29: Illustration eines vom Felgenhorn unterschiedlichen Abschnitts einer Felge, der ausgebildet ist, um durch Spannmittel hintergriffen zu werden.

In den folgenden Figuren tragen sich entsprechende Bauteile und Elemente gleiche Bezugszeichen. Der besseren

Übersichtlichkeit wegen sind nicht in allen Figuren sämtliche Bezugszeichen wiedergegeben.

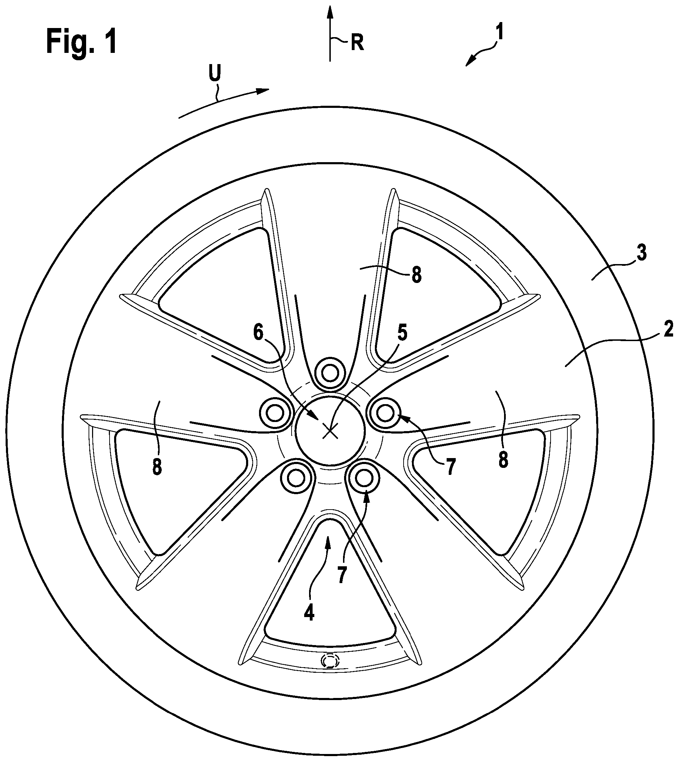

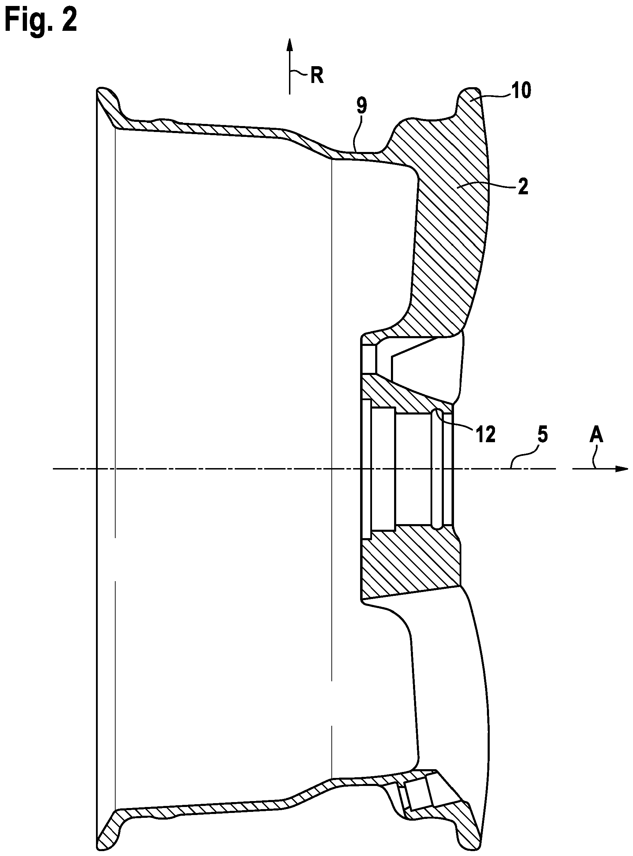

Figur 1 zeigt in schematischer Darstellung ein Fahrzeugrad 1. das Fahrzeugrad 1 umfasst eine Felge 2 und einen auf der Felge 2 angebrachten Reifen 3. Die Felge 2 ist in Figur 2 einzeln ohne den Reifen 3 gezeigt. Eine Umfangsrichtung ist durch einen Pfeil mit dem Bezugszeichen U dargestellt. Eine axiale Richtung ist durch einen Pfeil mit dem Bezugszeichen A dargestellt (Figur 2). Eine radiale Richtung ist durch einen Pfeil mit dem Bezugszeichen R dargestellt. Radial innenliegend umfasst die Felge 2 einen Lochkreis 4 des Fahrzeugrads 1. Im Zentrum des Lochkreises 4 ist um eine entlang der axialen Richtung A verlaufenden Drehachse 5 des Fahrzeugrads 1 eine sogenannte Mittenöffnung 6, die teilweise auch als Nabenbohrung oder Mittellochzentrierung bezeichnet wird, angeordnet. Der Lochkreis 4 umfasst vorliegend fünf Schraubenlöcher 7, von denen zwei mit einem Bezugszeichen versehen sind. Bei dem vorliegenden Fahrzeugrad 1 erstrecken sich fünf Speichen 8 vom Bereich des Lochkreises 4 nach radial außen.

Die Felge 2 umfasst ein Felgenbett 9 und ein Felgenhorn 10 und die Mittenöffnung 6 weist eine vertiefte umlaufende Nut 12 auf.

Hat der Reifen 3 des Fahrzeugrads 1 ein Loch, so entweicht die im Reifen befindliche Luft und die Reifenfunktion des Fahrzeugrades 1 eingeschränkt. Um in einem solchen Fall den Fahrbetrieb weiterhin zu ermöglichen kann ein erfindungsgemäßer Aufsatz 14 verwendet werden.

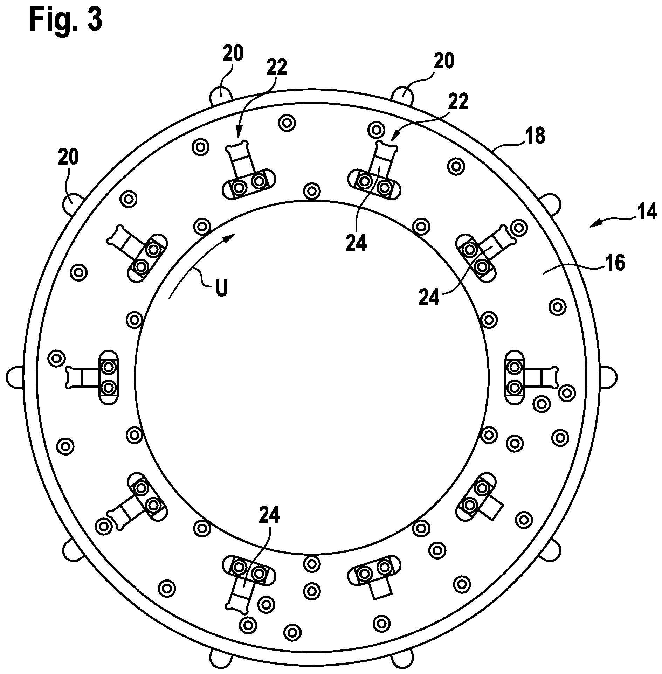

Ein Beispiel eines derartigen Aufsatzes ist in Figur 3 gezeigt. Der Aufsatz 14 ist mit einem Grundkörper 16 und mit einer Lauffläche 18 zur Kontaktierung einer Fahrbahn F ausgebildet.

In Figur 3 ist der Aufsatz 14 bei Blick auf seine im Montagezustand dem Fahrzeugrad 1 abgewandte Seite gezeigt. Um den Umfang des Aufsatzes 14 bzw. der Lauffläche 18 verteilt sind mehrere Kontaktabschnitte 20 an dem Aufsatz 14 angeordnet. Die Kontaktabschnitte 20 sind Teil eines jeweiligen Verspannmechanismus 22, der ausgebildet ist, um mit den Kontaktabschnitten 20 bei am Fahrzeugrad 1 angebrachtem Aufsatz 14 und sich drehendem Fahrzeugrad 1 die Fahrbahn F zu kontaktieren.

Der Aufsatz 14 umfasst auch mehrere Spannmittel 24 mit jeweiligen in Figur 3 nicht sichtbaren Hakabschnitten 26 denen jeweils ein Verspannmechanismus 22 mit einem Kontaktabschnitt 20 zugeordnet ist.

Bei rollenden Fahrzeugrad 1 daran angebrachtem Aufsatz 14 werden die Kontaktabschnitte 20 durch den Kontakt mit der Fahrbahn F betätigt. Dabei wird vorliegend über den Kontakt der Kontaktabschnitte 20 mit der Fahrbahn F über den jeweiligen Verspannmechanismus 22 eine Kraft auf das jeweilige Spannmittel 24 ausgeübt. Vorliegend werden durch diese Kraft die jeweiligen Spannmittel 24 betätigt und dabei auf die Felge 2, insbesondere das Felgenhorn 10, hin bewegt, insbesondere wird der Hakabschnitt in Hintergriff mit dem Felgenhorn 10, das einen Abschnitt 11 der Felge darstellt, gebracht. Die Spannmittel 24 können jedoch auch andere Abschnitte 11 der Felge 2 als das Felgenhorn 10 der Felge 2 hintergreifen. Eine Betätigung der Spannmittel 24 kann jedoch auch erfolgen, ohne dass eine Kraft vom Kontaktabschnitt 20 auf das Spannmittel übertragen wird.

Bei der Montage des Aufsatzes 14 wird dieser zunächst am Fahrzeugrad 1 angebracht. Dies kann beispielsweise mittels eines herkömmlichen Spanngurts erfolgen. Bevorzugt ist, wenn der Aufsatz 14 eine Anbringeinrichtung 54 umfasst, auf die später im Detail eingegangen wird. Bei dieser Anbringung des Aufsatzes 14 ist dieser noch nicht derart am Fahrzeugrad 1 befestigt, dass ein Fahrzeugbetrieb sicher gewährleistet ist

Wenn der Aufsatz 14 wie oben beschrieben am Fahrzeugrad angebracht ist, so wird das Fahrzeugrad 1 um eine Umdrehung bewegt und die einzelnen Kontaktabschnitte 20 kontaktieren die Fahrbahn F.

Bei dieser ersten Drehung wird der jeweilige Verspannmechanismus 22 jedes Spannmittels 24 betätigt. Die Verspannmechanismen 22 sind ausgebildet, um mit den Kontaktabschnitten 20 bei am Fahrzeugrad 1 angebrachtem Aufsatz 14 und sich drehendem Fahrzeugrad 1 die Fahrbahn F zu kontaktieren, wodurch er betätigt, insbesondere mit Druck beaufschlagt wird, und durch den Kontakt mit der Fahrbahn F die Spannmittel 24 zu betätigen. Vorliegend sind die Kontaktabschnitte 20 derart mit den Spannmitteln 24 gekoppelt, dass die Kontaktabschnitte 20 eine Kraft auf die Spannmittel 24 ausüben, um die Spannmittel 24 zu betätigen und dabei auf die Felge 2, insbesondere das Felgenhorn 10, hin zu bewegen. Durch diese Bewegung der Spannmittel 24 wird ihr jeweiliger Hakabschnitt 26 in Hintergriff mit dem Felgenhorn 10 gebracht. Wenn das Fahrzeugrad 1 eine erste Umdrehung abgeschlossen hat sind sämtliche Kontaktabschnitte 20 in Kontakt mit der Fahrbahn F gewesen und alle Spannmittel 24 wurden über den jeweiligen Kontaktabschnitt 20 betätigt. Die Spannmittel 24 stehen nach Betätigung in Hintergriff mit dem Felgenhorn 10. Der Aufsatz 14 ist dann sicher am Fahrzeugrad 1 befestigt und ein Fahrbetrieb des Fahrzeugs kann wieder aufgenommen werden.

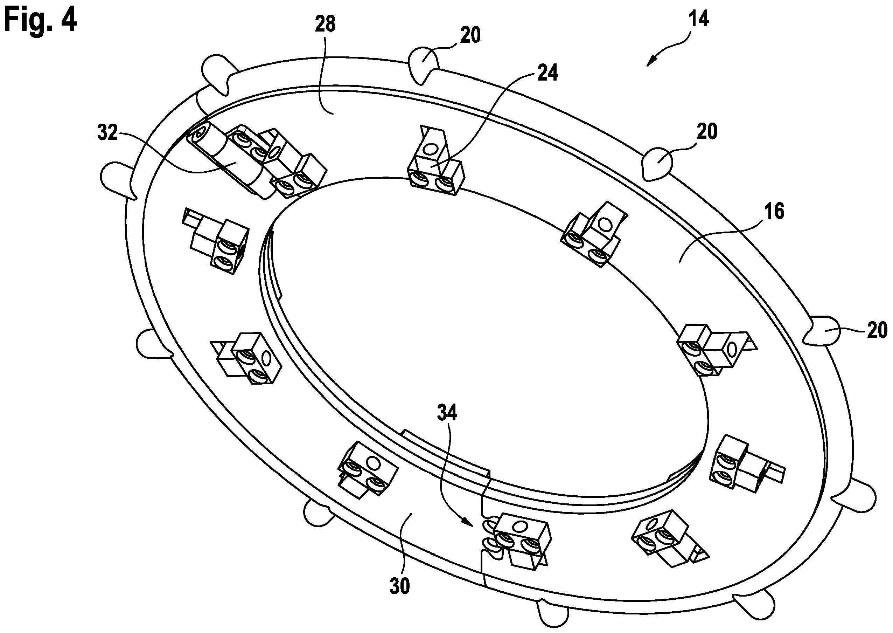

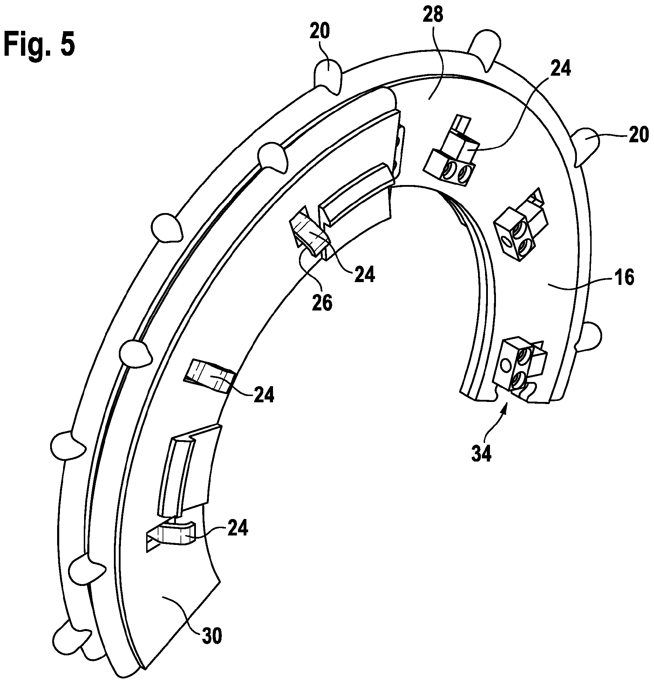

In den Figuren 4 und 5 ist eine alternative Ausführungsform des Aufsatzes 14 illustriert. Der in den Figuren 4 und 5 gezeigte Aufsatz 14 weist einen zweigeteilten Grundkörper 16 auf. Der Grundkörper 16 umfasst ein erstes umfängliches Segment 28 und ein zweites umfängliches Segment 30. Das erste umfängliche Segment 28 weist eine umfängliche Erstreckung von mehr als 180° auf. Die beiden umfänglichen Segmente sind über ein Scharniereinrichtung 32 miteinander verbunden und an dem der Scharniereinrichtung 32 gegenüberliegenden Seite sind die beiden umfänglichen Segmente über einen schwalbenschwanzartig ausgebildeten Hintergriffabschnitt verbunden.

In Figur 4 ist der Aufsatz 14 in einer Konfiguration gezeigt in der er an dem Fahrzeugrad 1 angebracht ist.

In Figur 5 ist der Aufsatz 14 in einer Konfiguration gezeigt in der er einfach verstaubar ist und durch einfaches Aufklappen in die in Figur 4 gezeigte Konfiguration überführt werden kann. Der Aufsatz 14 kann eingeklappt am Fahrzeugrad 1 angebracht werden, wobei der umfänglich unterbrochene Bereich zur Fahrbahn F gerichtet ist. Das Fahrzeugrad 1 kann daraufhin bewegt werden, so dass der umfänglich unterbrochene Bereich des Aufsatzes von der Fahrbahn F weg gerichtet ist. Das zweite umfängliche Segment 30 kann in den umfänglich unterbrochenen Bereich geklappt werden und das Fahrzeugrad bewegt werden, wodurch die Kontaktabschnitte 20 und dadurch wiederum die Spannmittel 24 betätigt werden.

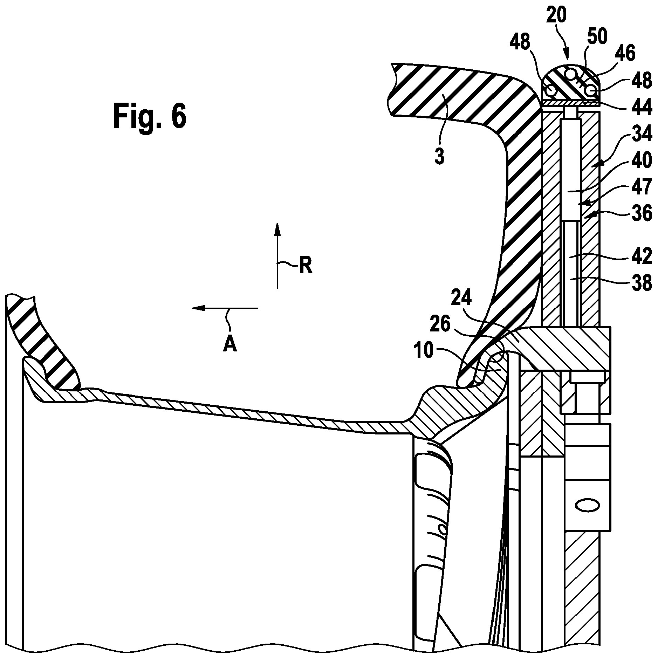

In Figur 6 ist der Hintergriff der Spannmittel 24 mit dem Felgenhorn 10, an einer weiteren erfindungsgemäßen Ausführungsform illustriert. Die Ausführungsform von Figur 6 umfasst eine Druckübertragungseinrichtung 34 mit einer Freilaufeinrichtung 36. Die Freilaufeinrichtung 36 umfasst einen Druckzylinder 38 mit einem ersten Zylinderteil 40 und einem zweiten Zylinderteil 42. Das Spannmittel 24 ist mit dem Kontaktabschnitt 20 über die Freilaufeinrichtung 36 mechanisch gekoppelt. Damit ist vorliegend gemeint, dass durch eine Bewegung des Kontaktabschnitts 20 über die Freilaufeinrichtung 36 eine Kraft auf das Spannmittel 24 übertragbar ist. Beim Abrollen des Fahrzeugrads 1 mit dem daran angebrachten Aufsatz 14 werden die Kontaktabschnitte 20 durch den Kontakt mit der Straße nach radial innen bewegt. Dabei werden die Spannmittel 24 betätigt bzw. vorliegend wird eine Kraft auf die Spannmittel 24 übertragen. Die Spannmittel 24 werden mit dieser Kraft gegen die Felge 2 bzw. das Felgenhorn 10 gedrückt. Die Spannmittel 24 hintergreifen bei Betätigung das Felgenhorn 10. Wenn alle Spannmittel 24 das Felgenhorn 10 hintergreifen, ist der Aufsatz 14 am Fahrzeugrad befestigt. Wird bei der oben genannten Kraftübertragung eine bestimmte Kraft bzw. ein Grenzdruck, mit dem das Spannmittel 24 gegen das Felgenhorn 10 drückt, überschritten, so schieben sich die beiden Zylinderteile 40 und 42 ineinander. Dies geschieht beispielsweise dann, wenn der Kontaktabschnitt 20 noch nicht in seiner Endposition angekommen ist und der Hakabschnitt 26 das Felgenhorn 10 jedoch bereits vollständig hintergreift und an diesem anliegt. Der Kontaktabschnitt 20 ist bei der vorliegenden Ausführungsform in Form eines in Umfangsrichtung U gewölbten Federblechs 44 ausgeführt, das einen Abschnitt eines Laufflächenkörpers 46 nach radial außen drängt. Dieser Abschnitt des Laufflächenkörpers 46 weicht im unbelasteten Zustand also von der Kreisringform des restlichen Laufflächenkörpers 46 ab und wird bei Abrollen über die Fahrbahn F nach innen gedrückt, wobei Kraft über die Druckübertragungseinrichtung 34 und die Freilaufeinrichtung 36 auf das Spannmittel 24 übertragen wird.

Der Laufflächenkörper 46 umfasst vorliegend Hohlräume 48, die in einem elastischen Material 50 angeordnet sind. Hierdurch ist der Laufflächenkörper 46 besonders nachgiebig und dämpfend ausgebildet.

Die Druckübertragungseinrichtung 34 mit der Freilaufeinrichtung 36 umfasst auch einen Haltemechanismus 47. Der Haltemechanismus 47 ist beim vorliegenden Ausführungsbeispiel derart ausgebildet, dass er die beiden Zylinderteile 40 und 42 miteinander verriegelt, wenn der Kontaktabschnitt 20 komplett in die Lauffläche 18 eingefahren ist. Andere Ausführungen des Haltemechanismus 47 sind denkbar. Der Haltemechanismus 47 verhindert, dass die Spannmittel 24 sich aus ihrem Hintergriff mit dem Abschnitt 11 der Felge 10 bzw. dem Felgenhorn 10 bewegen, wenn der Kontaktabschnitt 20 nicht mehr auf der Fahrbahn F aufliegt. Vorzugsweise ist der Haltemechanismus 47 über ein Werkzeug aus seinem eingerasteten Zustand lösbar.

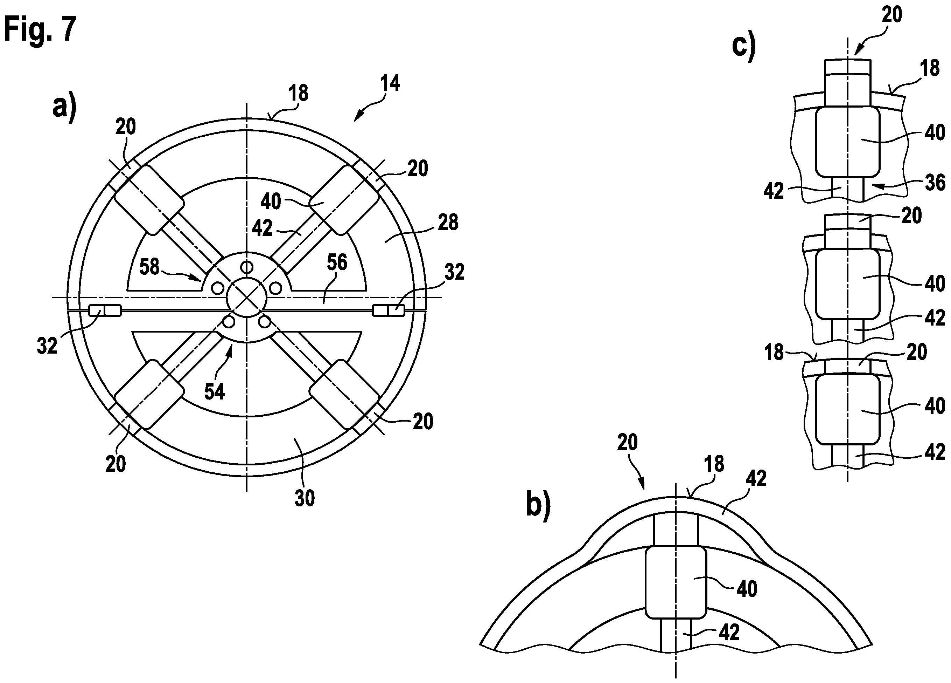

Figur 7a) zeigt eine weitere Ausführungsform eines Aufsatzes 14. Der in Figur 7a) gezeigte Aufsatz 14 umfasst eine Anbringeinrichtung 54, die ausgebildet ist, um den Aufsatz 14 am Fahrzeugrad 1 auszurichten und derart anzubringen, dass der Aufsatz 14 anschließend durch eine Bewegung des Fahrzeugs mittels der über den Kontaktabschnitt 20 betätigbaren Spannmittel 24 am Fahrzeugrad 1 befestigbar ist.

Die Anbringeinrichtung 54 ist vorliegend an einer kreissehnenartig verlaufenden Strebe 56 angeordnet. Die Anbringeinrichtung 54 umfasst ein Lochmuster 58 entsprechend dem Lochmuster des Lochkreises 4. Dadurch kann der Aufsatz 14 durch Entfernen von beispielsweise zwei Schrauben des Fahrzeugrades 1 angebracht werden. Die Schrauben werden entfernt und der Aufsatz 14 mit zwei längeren Schrauben am Fahrzeugrad 1 über den Lochkreis 4 eingeschraubt. Denkbar ist hier auch eine Anbringung über eine Einrichtung zum Eingriff in die Mittenöffnung 6, insbesondere in die Nut 12 der Mittenöffnung 6. Alternativ zur Entfernung der Schrauben des Fahrzeugrades 1 kann die Anbringeinrichtung auch eine Einrichtung zum klemmenden und/oder hintergreifenden Erfassen einer herkömmlichen Radschraube umfassen, worauf später noch im Detail eingegangen wird.

Beispielsweise zunächst das erste umfängliche Segment 28 angebracht werden. Das Fahrzeugrad 1 kann dann um 180° gedreht werden, sodass das erste umfängliche Segment 28 in Kontakt mit der Fahrbahn F kommt. Anschließend kann das zweite umfängliche Segment 30 nach oben geklappt werden und dessen Scharniereinrichtungen 32 verriegelt werden. Das Fahrzeugrad 1 kann dann eine vollständige Umdrehung durchführen und sämtliche Kontaktabschnitte 20 kontaktieren die Fahrbahn F, wodurch alle Spannmittel 24 in Hintergriff mit dem Felgenhorn 10 gebracht werden. Der Aufsatz 14 ist dann fahrbereit am Fahrzeugrad 1 befestigt.

Bevorzugt ist, wenn der Kontaktabschnitt 20 in einem ausgefahrenen Zustand absatzfrei mit der Lauffläche 18 des Aufsatzes 14 verläuft. Eine derartige Ausführungsform ist in Figur 7b) gezeigt. Mit absatzfrei ist dabei gemeint, dass der Kontaktabschnitt keinen sprunghaften Absatz gegenüber der Lauffläche 18 bildet.

In Figur 7c) ist nochmals die Funktion der Freilaufeinrichtung 36 schematisch dargestellt. Im ersten Bild von Figur 7C ist der Kontaktabschnitt 20 komplett ausgefahren. Bei Kontakt mit der Fahrbahn F wird der Kontaktabschnitt 20 durch den Druck des Fahrzeuggewichts zunächst so weit eingefahren, bis das Spannmittel 24 in Kontakt mit der Felge 2 steht bzw. der Hakabschnitt 26 das Felgenhorn 10 hintergreift. Dieser Zustand ist in Figur 7c) in der zweiten Abbildung gezeigt. Daraufhin wird die Freilaufeinrichtung 36 betätigt. Und der Kontaktabschnitt 20 bewegt sich unabhängig von der Bewegung des Spannmittels 24 weiter nach radial innen, bis er vollständig in der Lauffläche 18 des Aufsatzes eingefahren ist. Die Freilaufeinrichtung 36 bildet auch gleichzeitig eine Druckbegrenzungseinrichtung 52, da sie den Druck, mit dem das Spannmittel 24 die Felge 2 bzw. das Felgenhorn 10 kontaktiert auf einen Grenzdruck begrenzt.

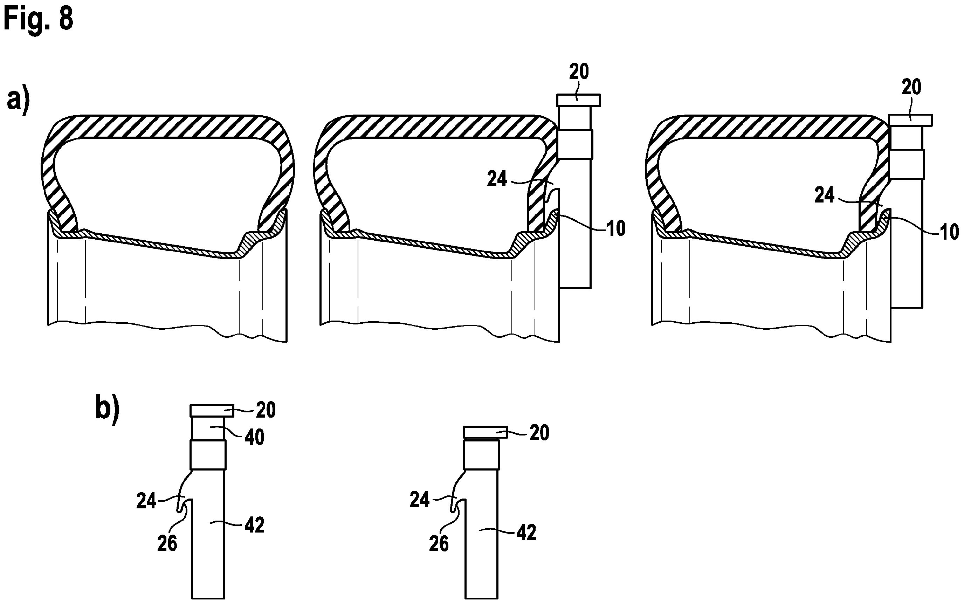

Bevorzugt weisen die Spannmittel 24 einen maximalen Verfahrweg auf, der mehr als einen Zoll beträgt. Hierdurch kann ein Aufsatz 14 bei gleichbleibender Fahrzeugradgröße auf verschiedene Felgengrößen angepasst werden. Diese Anpassung erfolgt automatisch durch Betätigung der Spannmittel 24 über die Kontaktabschnitte 20. Dies ist beispielhaft und schematisch in Figur 8 illustriert. Figur 8a) zeigt die Anbringung eines Aufsatzes schematisch an einer kleineren Felge 2. Die mittlere Darstellung von Figur 8a) entspricht der Anbringung des Aufsatzes am Fahrzeugrad 1, bevor die Spannmittel 24 das Felgenhorn 10 hintergreift. Die Kontaktabschnitte 20 stehen über die Lauffläche 18 hinaus. Wird das Fahrzeugrad 1 gedreht, so bewegen sich die Kontaktabschnitte 20 nach radial innen und die Spannmittel 24 hintergreifen das Felgenhorn 10. Dieser Zustand ist in der rechten Darstellung von Figur 8a gezeigt. Diese Konfiguration entspricht dem befestigten Zustand des Aufsatzes 14, in dem der Aufsatz 14 fahrbereit am Fahrzeugrad 1 montiert ist.

Die in der rechten Darstellung von Figur 8a) gezeigte Konfiguration des Kontaktabschnitts 20 gegenüber dem Spannmittel 24 ist in der linken Darstellung von Figur 8b) nochmals gezeigt. Wird der entsprechende Aufsatz 14 auf einer größeren Felge 2 bei gleichem Durchmesser des Fahrzeugrads 1 befestigt, so wird der Kontaktabschnitt 20 in die in der rechten Darstellung von Figur 8b) gezeigte Konfiguration überführt.

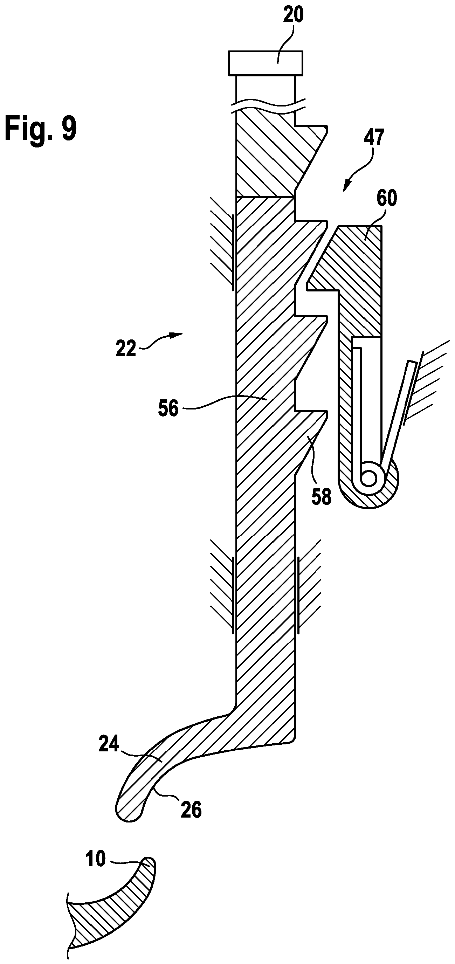

In den Figuren 9 bis 12 sind weitere mögliche Ausgestaltungen des Verspannmechanismus 22 gezeigt. In Figur 9 ist eine Ausführungsform gezeigt, in der das Spannmittel 24 über einen Schaft 56, der ein Kraftübertragungselement 56 bildet, mit dem Kontaktabschnitt 20 verbunden ist. An dem Schaft 56 sind abgewinkelt Vorsprünge 58 angeordnet, in die ein federgelagerter Einrastmechanismus 60 eingreifen kann. Der Einrastmechanismus 60 zusammen mit den Vorsprünge 58 bildet einen Haltemechanismus 47, der den Hakabschnitt 26 in Kontakt mit dem Felgenhorn 10 hält, wenn er an diesem anliegt. Der Haltemechanismus 47 ist dabei in Fig. 9 lediglich schematisch dargestellt, beispielsweise kann der Abstand der einzelnen abgewickelten Vorsprünge 58 wesentlich feiner ausgebildet sein als dies in Figur 9 dargestellt ist.

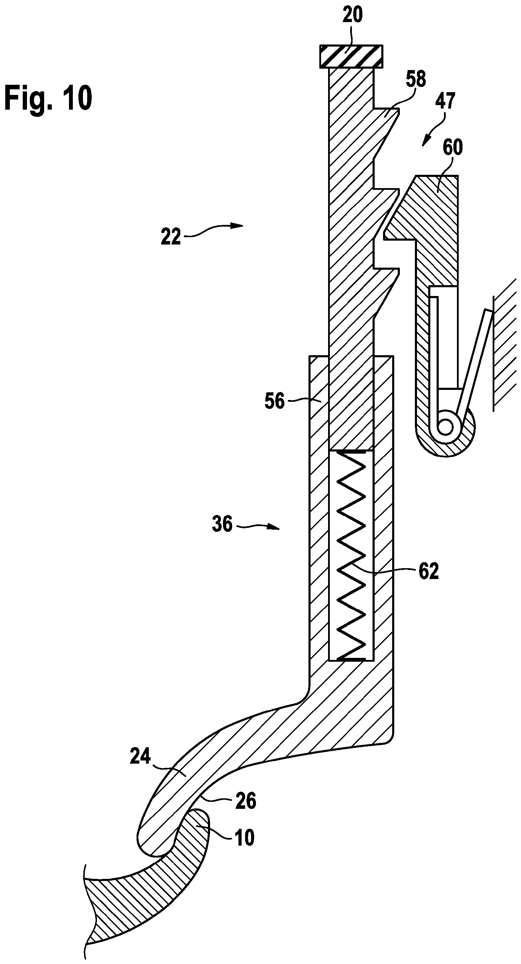

In Figur 10 ist ein weiterer Verspannmechanismus 22 gezeigt. Der Haltemechanismus 47 dieser Ausführungsform ist ähnlich dem von Figur 9. Der Verspannmechanismus 22 aus Figur 10 weist zusätzlich eine Freilaufeinrichtung 36 auf. Die Freilaufeinrichtung 36 umfasst eine Feder 62, die in dem Schaft 56 angeordnet ist. Durch die Feder 62 ist der Schaft 56 in seiner Erstreckung vom Hakabschnitt 26 zum Kontaktabschnitt 20 hin elastisch komprimierbar. Der Kontaktabschnitt 20 ist also weiter radial einwärts bzw. zum Felgenhorn 10 hin bewegbar, auch wenn der Hakabschnitt 46 bereits am Felgenhorn 10 anliegt und nicht mehr weiter radial einwärts bewegbar ist. Die Freilaufeinrichtung 36 bildet auch gleichzeitig eine Druckbegrenzungseinrichtung 52, da sie den Druck, mit dem das Spannmittel 24 die Felge 2 bzw. das Felgenhorn 10 kontaktiert auf einen Grenzdruck begrenzt. Sobald der Hakabschnitt 26 am Felgenhorn 10 anliegt und der Kontaktabschnitt 20 weiter Druck in Richtung radial innen ausgeübt, wird die Feder 62 komprimiert, sodass der Druck, mit dem das Spannmittel 24 am Felgenhorn 10 anliegt, auf den Druck, der zum Komprimieren der Feder notwendig ist, also den Grenzdruck der Druckbegrenzungseinrichtung 52, begrenzt ist.

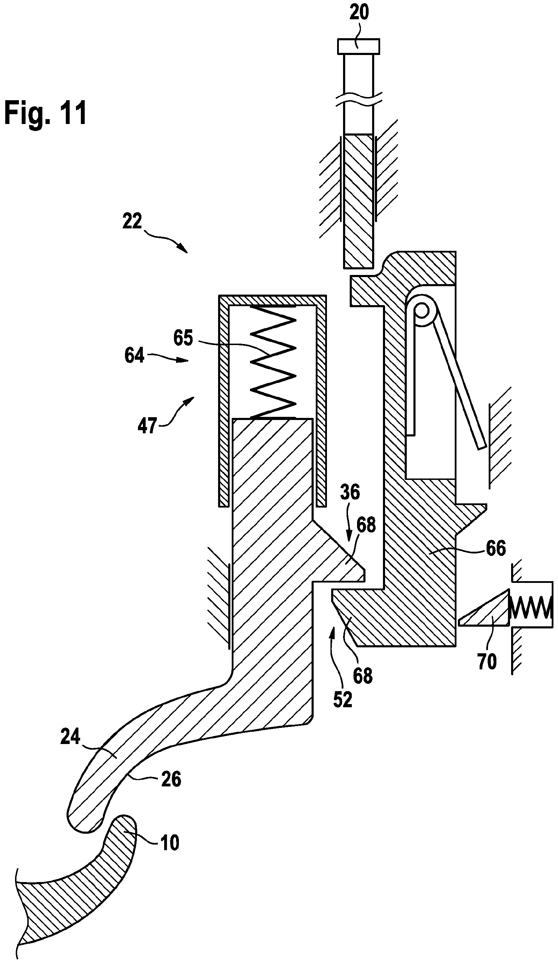

In Figur 11 ist eine Ausführungsvariante gezeigt, bei der der Verspannmechanismus 22 eine Vorspanneinrichtung 64 umfasst, die das Spannmittel 24 in Richtung des Felgenhorns 10 spannt. Die Vorspannung des Spannmittels 24 ist dabei vorliegend über die Feder 65 federbasiert ausgebildet. Denkbar ist jedoch auch eine Ausführungsform mittels eines Druckmittelspeichers, beispielsweise eine pneumatische Vorspannung. Ein Rückhalteelement 66 ist dabei derart angeordnet, dass es das Spannmittel 24 zurückhält, bis der Kontaktabschnitt 20 durch Kontakt mit der Fahrbahn F nach radial innen bewegt wird und hierdurch das Rückhalteelement 66 ebenfalls nach radialinnen bewegt wird. Wird das Rückhalteelement 66 nach radial innen bewegt, so gibt es das Spannmittel 24 frei, wodurch das Spannmittel 24 aufgrund seiner Vorspannung ebenfalls nach radial innen bewegt wird und mit dem Felgenhorn 10 in Kontakt gelangt.

Die Ausführungsform von Figur 11 weist eine Druckbegrenzungseinrichtung 52 sowie eine Freilaufeinrichtung 36 auf, die durch die beiden ineinander hakenden Abschnitte 68 am Schaft 56 des Spannmittels 24 und dem Rückhalteelement 66 gebildet sind. Liegt das Spannmittel 24 am Felgenhorn 10 an, so kann der hakende Abschnitt 68, der am Rückhalteelement 66 angeordnet ist, sich weiter nach radialinnen bewegen und vom hakenden Abschnitt 68 am Schaft 56 des Spannmittels 24 abheben. Das Spannmittel 24 liegt dann aufgrund seiner Federvorspannung mit einem genau definierten Druck am Felgenhorn 10 an.

Die Vorspanneinrichtung 64 des Verspannmechanismus 22 in Figur 11 bildet zusammen mit dem federgelagerten Vorsprung 70 auch den Haltemechanismus 47, der ausgebildet ist, um das Spannmittel 24 in seiner Position zu halten, wenn das Spannmittel 24 mit seinem Hakabschnitt 26 in Hintergriff mit dem Abschnitt 10 der Felge 2, vorzugsweise dem Felgenhorn 10, steht.

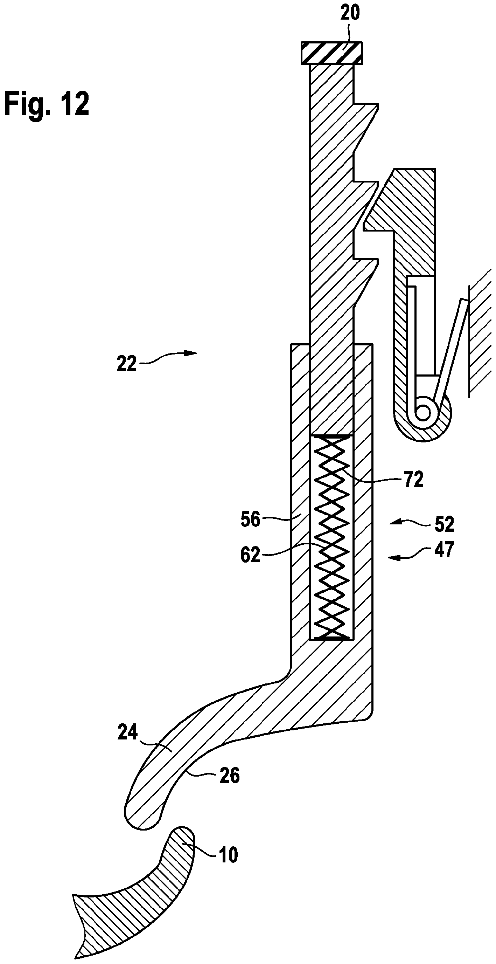

In Figur 12 ist eine Ausführungsvariante gezeigt, die der Ausführungsform von Figur 10 ähnelt. Die Feder 62 der Ausführungsform von Figur 10 ist bei der Ausführungsform von Figur 12 jedoch durch ein plastisch verformbares Element 72 ergänzt. Hierdurch kann die Aktivierung der Freilaufeinrichtung 36 auf einen höheren Druck eingestellt werden, als der Anpressdruck (vorgegeben durch die Feder 62 des Haltemechanismus 47), mit dem der Hakabschnitt 26 das Felgenhorn 10 kontaktiert. Erst wenn der Druck, den der Kontaktabschnitt 20 in Richtung Felgenhorn 10 auf das Spannmittel 24 ausübt, groß genug ist, um das plastisch verformbare Element 72 plastisch zu verformen, ist die Freilaufeinrichtung 36 aktiv. Der Haltemechanismus 47 wirkt hingegen mit der Kraft der Feder 62.

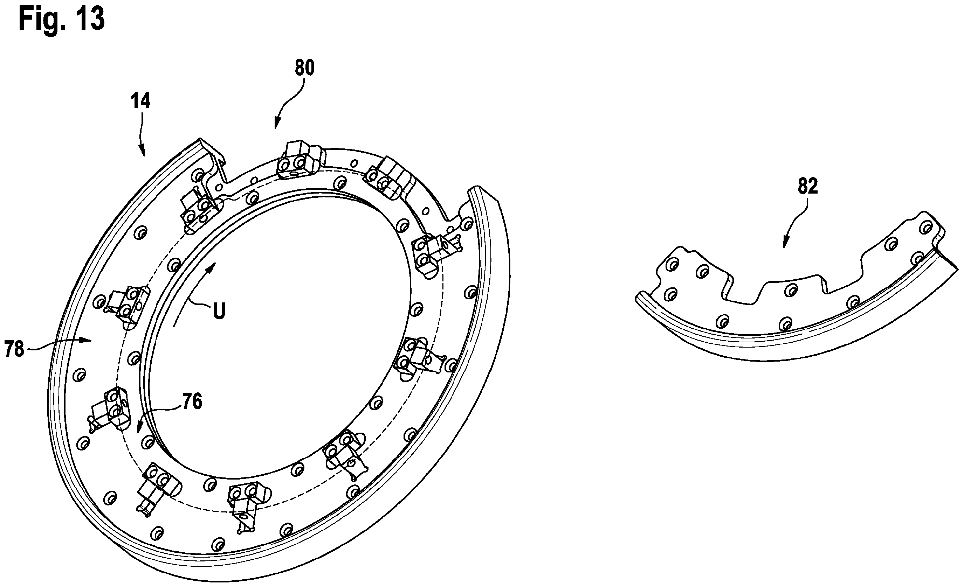

Figur 13 zeigt eine alternative Ausführungsform des Aufsatzes 14. Bei der Ausführungsform von Figur 13 ist der Grundkörper 16 mit einem in umfänglicher Richtung U geschlossen ausgebildeten Montageabschnitt 76 und einen Laufflächenabschnitt 78 ausgebildet. Der Laufflächenabschnitt 78 ist in umfänglicher Richtung U mit einer Unterbrechung 80 ausgebildet. Der Laufflächenabschnitt 78 umfasst einen in der Unterbrechung 80 aufnehmbaren Einsatzabschnitt 82, der in der Unterbrechung 80 derart aufnehmbar ist, dass der Laufflächenabschnitt 78 die Lauffläche 18 bildet.

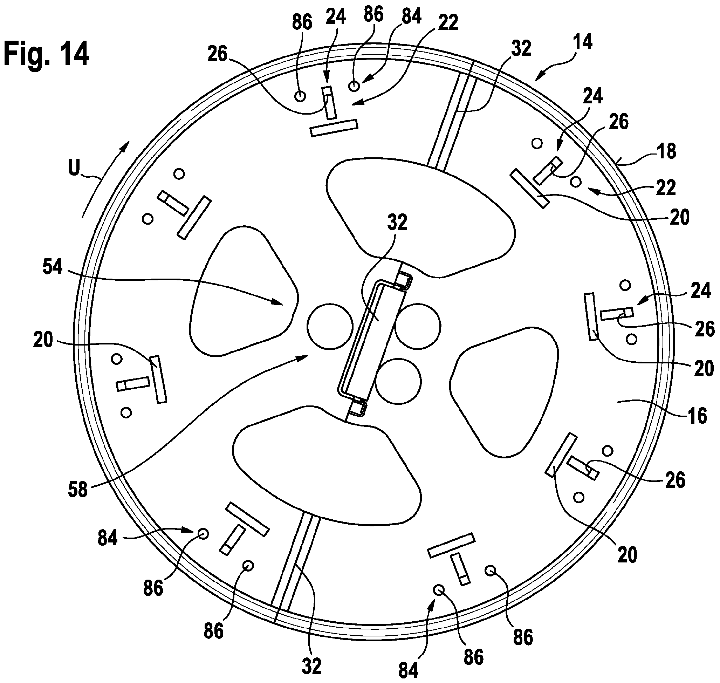

Figur 14 zeigt eine alternative Ausführungsform des erfindungsgemäßen Aufsatzes 14 bei Blick auf seine im Montagezustand dem Fahrzeugrad 1 zugewandte Seite. Um den Umfang des Aufsatzes 14 bzw. der Lauffläche 18 verteilt sind mehrere Kontaktabschnitte 20 an dem Aufsatz 14 angeordnet. Die Kontaktabschnitte 20 sind dabei derart angeordnet, dass sie bei der vorgesehenen Anbringung am Fahrzeugrad 1 dem Fahrzeugrad 1 zugewandt sind und das Fahrzeugrad 1, insbesondere die Felge 2, kontaktieren können.

Der in Figur 14 gezeigte Aufsatz 14 und die jeweiligen Verspannmechanismen 22 sind derart ausgebildet, dass die Kontaktabschnitte 20 beim Anbringen des Aufsatzes 14 die Felge 2 kontaktieren und dadurch betätigt werden. Durch die Betätigung der Kontaktabschnitte 20 werden über den jeweiligen Verspannmechanismus 22 die Spannmittel 24, den die jeweiligen Kontaktabschnitt 20 zugeordnet sind betätigt und in Hintergriff mit dem Felgenhorn 10 gebracht. Die Spannmittel 24 können jedoch auch derart ausgebildet und angeordnet sein, dass sie die Felge 2 an einem anderen Abschnitt als dem Felgenhorn 10 hintergreifen.

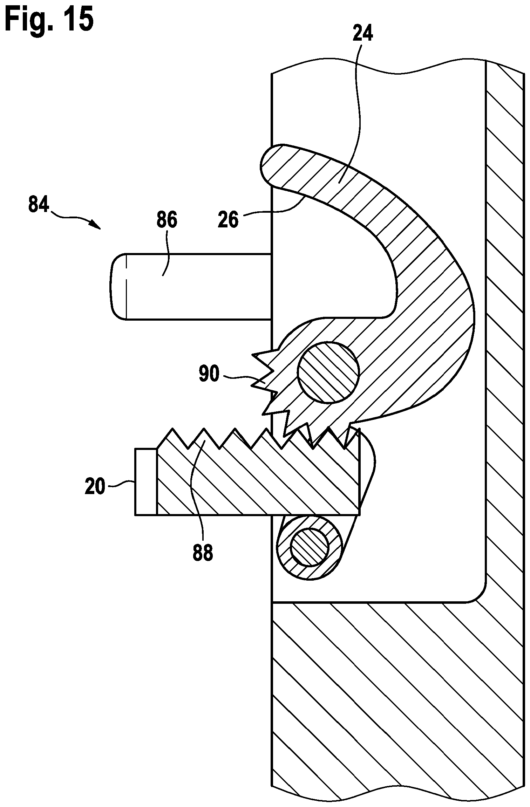

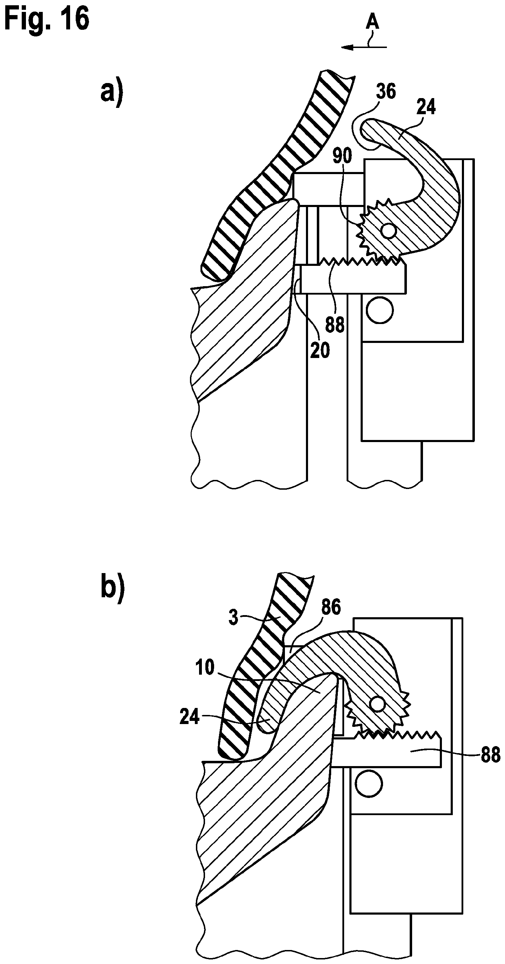

Die Spannmittel 24 bzw. Verspannmechanismen 22 sind bei der Ausführungsform von Figur 14 derart ausgebildet, dass die Spannmittel 24 schwenkend das Felgenhorn 10 hintergreifen, wenn sie betätigt werden. Die Spannmittel 24 sind in den Figuren 15 und 16 im Detail dargestellt.

Der Aufsatz aus Fig. 14 umfasst Reifenverdrängeinrichtungen 84, die ausgebildet sind, um den Reifen 3 beim Anbringen des Aufsatzes 14 und beim Betätigen der Spannmittel 24 in axialer Richtung A vom Felgenhorn 10 weg zu drängen. Die Reifenverdrängeinrichtungen 84 sind dabei jeweils einem Spannmittel 24 zugeordnet und gesondert von dem Spannmittel 24 ausgebildet. Eine Reifenverdrängeinrichtung 84 kann jedoch auch in dem Spannmittel 24 integriert ausgebildet sein.

Im vorliegenden Beispiel sind die einzelnen Reifenverdrängeinrichtungen 84 in Form von jeweils zwei Vorsprüngen 86 ausgebildet, die in Umfangsrichtung U jeweils beidseitig neben dem jeweiligen Spannmittel 24, dem sie zugeordnet sind, angeordnet sind. Die Vorsprünge 86 ragen in axialer Richtung A von der der Felge 2 zugewandten Seite des Aufsatzes 14 ab und sind vorliegend stabartig ausgebildet.

Die Kontaktabschnitte 20 sind über einen jeweiligen Zahnstangenabschnitt 88 mit einer Verzahnung 90 der Spannmittel 24 gekoppelt. Hierauf wird weiter unten noch im Detail eingegangen.

Die Anbringeinrichtung 54 des Aufsatzes 14 aus Figur 14 ist ähnlich der Anbringeinrichtung 54 der Ausführungsform von Figur 7a) ausgebildet. Die Anbringeinrichtung 54 umfasst ein Lochmuster 58 entsprechend dem Lochmuster des Lochkreises 4. Dadurch kann der Aufsatz 14 durch Entfernen von beispielsweise zwei Schrauben des Fahrzeugrades 1 angebracht werden. Die Schrauben werden entfernt und der Aufsatz 14 mit zwei längeren Schrauben am Fahrzeugrad 1 über den Lochkreis 4 eingeschraubt. Denkbar ist hier auch eine Anbringung über eine Einrichtung zum Eingriff in die Mittenöffnung 6, insbesondere in die Nut 12 der Mittenöffnung 6. Alternativ zur Entfernung der Schrauben des Fahrzeugrades 1 kann die Anbringeinrichtung auch eine Einrichtung zum klemmenden und/oder hintergreifenden Erfassen einer herkömmlichen Radschraube umfassen, worauf später noch im Detail eingegangen wird. Statt der gezeigten Anbringeinrichtung 54 kann der Aufsatz 14 auch über einen Spanngurt am Fahrzeugrad 1 befestigt werden.

Wird der Aufsatz 14 am Fahrzeugrad 1 über die Anbringeinrichtung 54 angebracht, so kontaktieren die Vorsprünge 86 der Reifenverdrängeinrichtungen 84 den Reifen 3 im Bereich um das Felgenhorn 10, wie in Figur 16 a) gezeigt. Beim Anbringen des Aufsatzes 14 bewegt sich der Aufsatz in axialer Richtung A zum Fahrzeugrad 1 hin. Die Reifenverdrängeinrichtungen 84 drängen dabei den Reifen 3 jeweils in axialer Richtung A vom Felgenhorn 10 weg. Gleichzeitig kontaktieren die Kontaktabschnitte 20 die Felge 2 und werden hierdurch betätigt. Über die Betätigung der Kontaktabschnitte 20 werden die Spannmittel 24 betätigt. Die Kontaktabschnitte 20 bewegen sich in axialer Richtung A in den Aufsatz 14 hinein und vorliegend ist ihre Bewegung über die Zahnstangenabschnitte 88 und die Verzahnungen 90 mit einer Schwenkbewegung der Spannmittel 24 gekoppelt. Die Spannmittel 24 schwenken derart auf die Felge 2 zu, dass sie mit dem Felgenhorn 10 in Hintergriff gelangen. Der Zustand, in dem der Aufsatz 14 vollständig am Fahrzeugrad 1 befestigt ist, ist in Figur 16b) gezeigt. Die Spannmittel 24 stehen in Hintergriff mit dem Felgenhorn 10 und der Aufsatz 14 ist sicher am Fahrzeugrad befestigt. Die Kopplung der Betätigung der Kontaktabschnitte 20 und der Betätigung der Spannmittel 24 kann auch andersartig implementiert sein als über die Kopplung der Zahnstangenabschnitte 88 mit den Verzahnungen 90.

Insbesondere ist es vorteilhaft, wenn die Verspannmechanismen 22 der Spannmittel 24 eine Freilaufeinrichtung 36 aufweisen.

Auch bei den Kontaktabschnitten 20, die ausgebildet und angeordnet sind, um über Kontakt mit der Felge 2 betätigt zu werden, ist es denkbar, dass die Spannmittel 24 einem Verspannmechanismus 22 zugeordnet sind, der derart ausgebildet ist, dass das Spannmittel gegen den Abschnitt 11 der Felge 2 vorgespannt, insbesondere federvorgespannt, ist und durch ein Rückhalteelement 66 gehalten ist, welches das Spannmittel 24 freigibt, sodass das Spannmittel 24 sich aufgrund der Vorspannung auf die Felge 2, insbesondere den Abschnitt 10 der Felge 2, hin bewegt, insbesondere der Hakabschnitt 26 den Abschnitt 11 der Felge 10 hintergreift, wenn der Kontaktabschnitt 20 betätigt, insbesondere mit Druck beaufschlagt, wird.

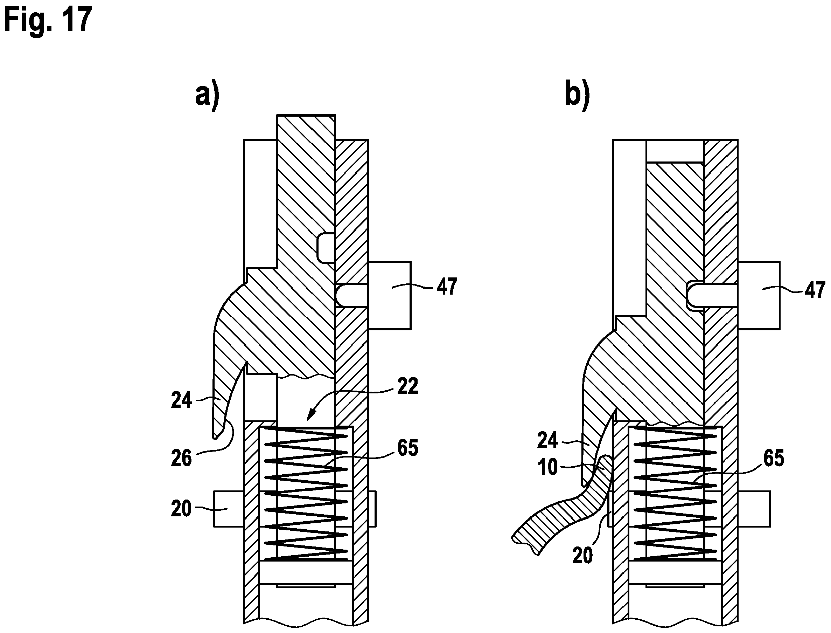

Eine derartige Ausführungsform ist in Figur 17 schematisch illustriert. Wird bei dieser Ausführungsform der Kontaktabschnitt 20 betätigt, so gibt dieser die Feder 65 frei und der Kontaktabschnitt bewegt sich nach radialinnen und hintergreift das Felgenhorn 10. Dieser Zustand ist in Figur 17 b) gezeigt. In der hintergreifenden Stellung ist das Spannmittel 24 durch den Haltemechanismus 47, der den Hakabschnitt 26 in Kontakt mit dem Felgenhorn 10 hält, gesichert. Der Haltemechanismus 47 kann gesondert über ein speziell ausgebildetes Werkzeug lösbar ausgebildet sein, um den Aufsatz 14 vom Fahrzeugrad 1 abzunehmen.

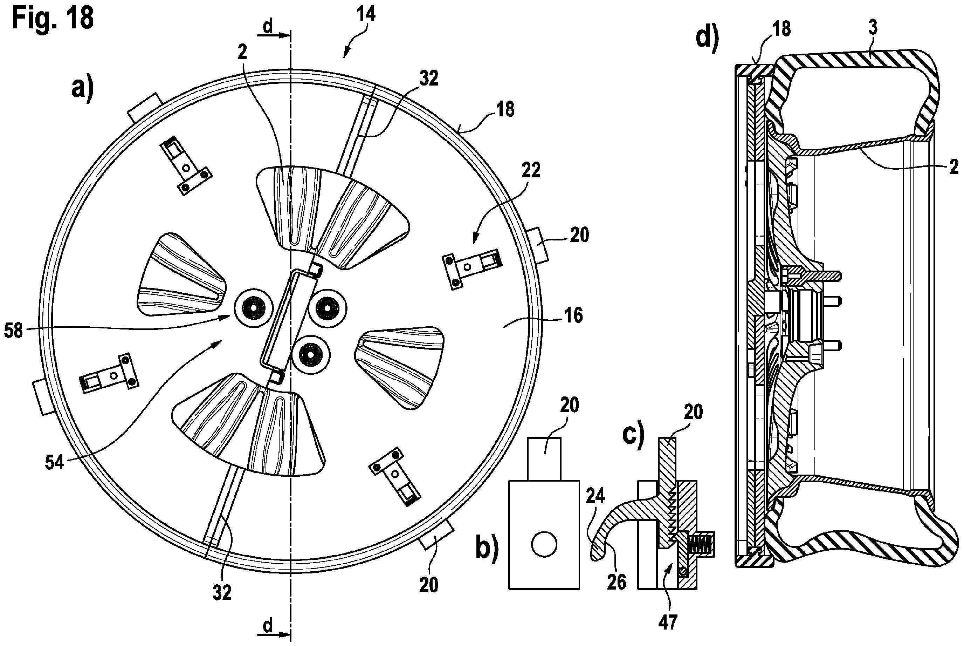

Figur 18 zeigt eine weitere erfindungsgemäße Ausführungsform eines Aufsatzes 14 in am Fahrzeugrad angebrachten Zustand. Der Aufsatz 14 aus Figur 18 ist mittig über die Schalleinrichtung 32 klappbar. Der Aufbau des Grundkörpers 16 entspricht im Wesentlichen dem des Aufsatzes aus Figur 14. Figur 18d) zeigt den Aufsatz 14 das Fahrzeugrad 1 entlang der Linie d-d geschnitten. Die Kontaktabschnitte 20 erstrecken sich in dem in Figur 18 A gezeigten Zustand aus der Lauffläche 18 hinaus. Wird nun das Fahrzeugrad eine vollständige Umdrehung bewegt, so werden alle Kontaktabschnitte 20 durch die Fahrbahn F kontaktiert und sie bewegen sich in die Lauffläche 18 hinein, wodurch die Spannmittel 24 betätigt werden und in Hintergriff mit der Felge 2 bzw. mit dem Felgenhorn 10 gelangen.

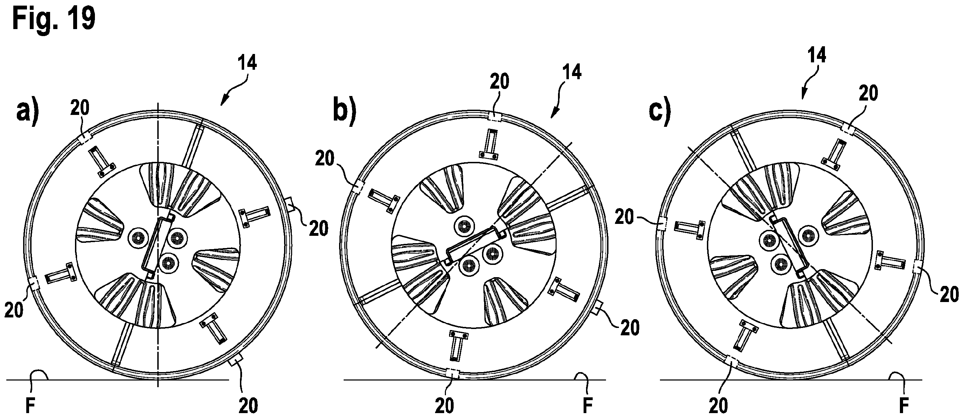

Ein derartiges Abrollen und ein Betätigen der Kontaktabschnitte 20 hintereinander ist in Figur 19 am Beispiel des Aufsatzes 14 aus Figur 18 gezeigt. Figur 19a) zeigt einen Zustand, in dem bereits zwei der Kontaktabschnitte 20 die Fahrbahn F kontaktiert haben. In Figur 19b) hat ein dritter Kontaktabschnitt 20 und in Figur 19 C haben alle Kontaktabschnitte 20 die Fahrbahn F bereits kontaktiert und wurden entsprechend betätigt.

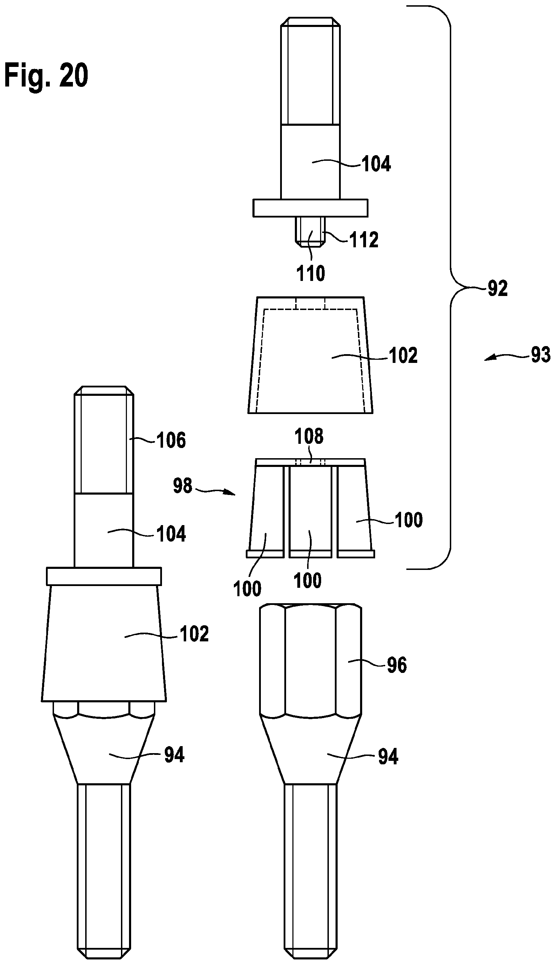

Figur 20 zeigt einen Adapter 92, der auf eine herkömmliche Radschraube 94 eines Fahrzeugrads 1 aufsetzbar ist. Der Adapter 92 stellt eine Einrichtung 93 zum beklemmenden Erfassen einer herkömmlichen Radschraube 94 dar. Die Schraube 94 des Fahrzeugrads weist einen Kopf 96 mit Aussensechskant auf. Der Adapter 92 umfasst eine Klemmhaube 98 mit sechs Klemmarmen 100, die entsprechend dem Aussensechskant des Kopfes 96 ausgebildet angeordnet sind. Der Adapter 92 umfasst des Weiteren eine Klemmhülse 102, die wenn sie auf die Klemmhaube 98 aufgeschoben wird, die Klemmarme 100 derart aufeinander zu spannt, dass der Kopf 96 der Radschraube 94 durch die Klemmarme 100 gegriffen wird. Der Adapter 92 umfasst außerdem einen Bolzen 104, mit dem die Klemmhülse 102 gegen die Klemmhaube 98 spannbar ist. Dieser verspannte Zustand ist in Figur 20 links gezeigt, während rechts eine Darstellung gezeigt ist, in der die einzelnen Komponenten des Adapter 92 sowie die Radschraube 94 jeweils getrennt voneinander dargestellt sind. Der Bolzen 104 weist ein Außengewinde 106 auf. Über den Bolzen 104 und das Außengewinde 106 kann über eine Schraubenmutter ein Aufsatz 14 am Fahrzeugrad 1 angebracht werden. Denkbar sind jedoch auch andere Ausgestaltungen des Bolzens 104, die eine Anbringung eines Aufsatzes 14 erlauben. Beispielsweise kann der Bolzen 104 ein Innengewinde tragen oder biegbare Arme mit Hakabschnitten aufweisen, sodass der Aufsatz 14 quasi über diese Arme geschoben werden kann und die Arme dann den Aufsatz 14 hakend hintergreifen. Vorteilhaft ist, wenn der Bolzen 104 derart ausgebildet ist, dass ein Aufsatz 14 kraft- oder formschlüssig gehalten mittels des dem Bolzens 104 am Fahrzeugrad 1 anbringbar ist.

Die Klemmhaube 98 weist ein Innengewinde 108 auf, in das ein Fortsatz 110 mit Außengewinde 112 des Bolzens 104 eingeschraubt werden kann, sodass die Klemmhaube 98 in die Klemmhülse 102 gezogen wird, wodurch die Klemmarme 100 aufeinander zu gespannt werden. Hierdurch kann der Schraubenkopf 96 der Radschraube 94 kraftschlüssig ergriffen werden.

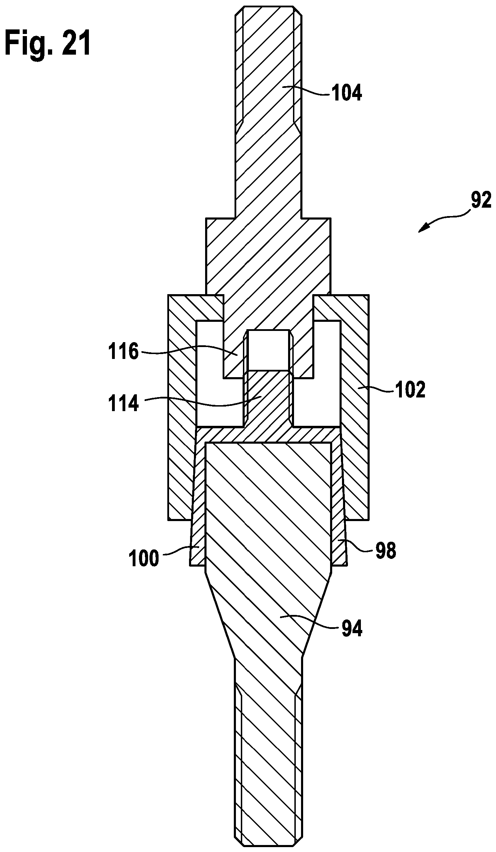

In Figur 21 ist eine alternative Ausführungsform des Adapters 92 gezeigt. Diese unterscheidet sich von der Ausführungsform aus Figur 20 dadurch, dass die Klemmhaube 98 einen Fortsatz 114 mit Außengewinde umfasst und der Bolzen 104 einen Fortsatz 116 mit Innengewinde.

Der Bolzen 104 kann auch Hakabschnitte 116 umfassen, die entsprechende Ausnehmungen 118 an speziell angepassten Radschrauben 94 eingreifen können. Derartige Hakabschnitte 116 sind auch im Bereich der Anbringeinrichtung 54 des Aufsatzes denkbar, sodass der Aufsatz 14 zum Anbringen quasi auf die speziell angepassten Radschrauben 94 aufclipsbar ist.

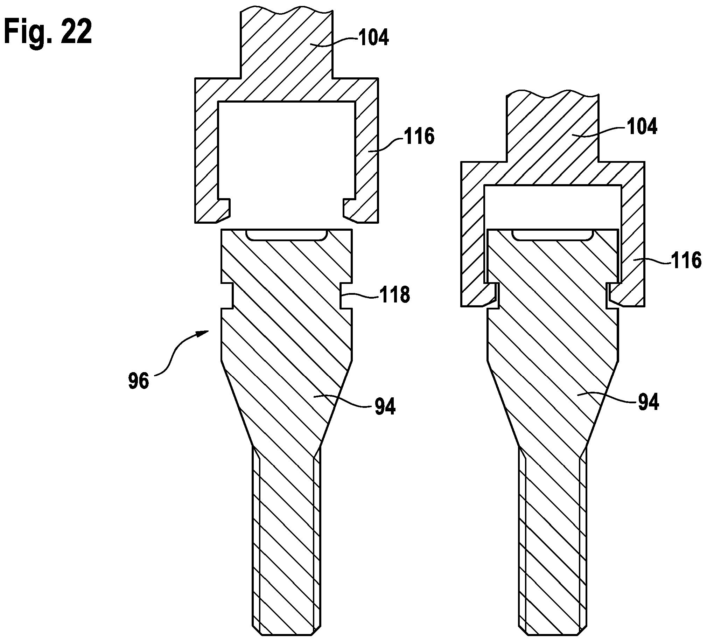

Dabei ist es denkbar, dass die Ausnehmungen 118, wie in Figur 22 gezeigt außenliegend am Schraubenkopf 96 angeordnet sind, oder auch wie in Figur 22 gezeigt, innenliegend angeordnet sind.

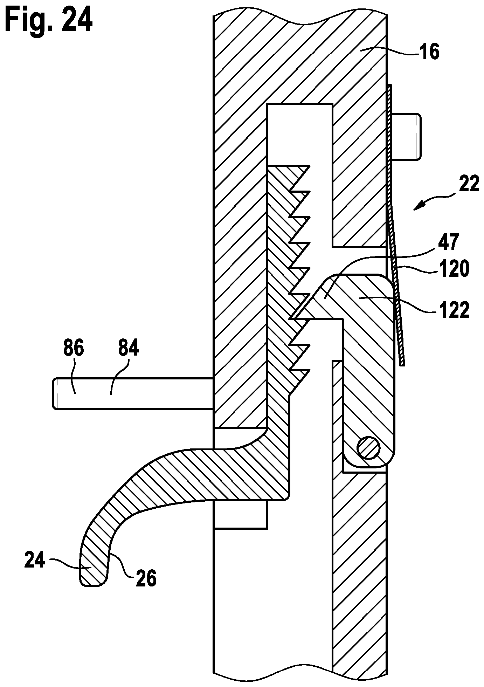

Figur 24 zeigt eine Ausführungsform eines Verspannmechanismus 22 sowie Spannmittels 24, die ähnlich der Variante von Figur 9 ausgebildet ist, die jedoch zusätzlich mit einer Reifenverdrängeinrichtung 84 ausgebildet ist. Bei dieser Variante sind die Kontaktabschnitte 20 bspw. radial außen liegend in der Lauffläche 18 angeordnet, denkbar ist jedoch auch eine Kopplung mit Kontaktabschnitten 20, die auf der der Felge 2 zugewandten Seite des Aufsatzes 14 angeordnet sind. Eine Blattfeder 120 spannt den einen Hakarm 122 umfassenden über Haltemechanismus 47.

Vorzugsweise weist wenigstens eines der Spannmittel 24 eine Sensoreinrichtung auf, die erfasst, wenn das Spannmittel 24 in dem gewünschten Hintergriff mit dem Felgenhorn 10 bzw. der Felge 2 steht. Die Sensoreinrichtung kann mit einer Signaleinrichtung gekoppelt sein, die ein Signal abgibt über das der Fahrzeugführer erkennen kann, dass der Aufsatz 14 in der vorgesehenen Position am Fahrzeugrad 1 befestigt ist, die Spannmittel 24 also im gewünschten Hintergriff mit der Felge 2 bzw. dem Felgenhorn 10 stehen. Die Signaleinrichtung kann dabei beispielsweise Fahrgastraum angeordnet sein. Die Signaleinrichtung kann jedoch auch am Aufsatz 14 selbst angeordnet sein. Das entsprechende Signal kann beispielsweise optisch, akustisch oder haptisch abgegeben werden.

Der Aufsatz kann auch eine Einrichtung umfassen, die erkennt, wenn das Fahrzeugrad 1 eine vollständige Drehung zurückgelegt hat, sodass alle Kontaktabschnitte 20 Fahrbahn F kontaktiert haben bzw. haben sollten. Dem Fahrzeugführer kann dann angezeigt werden, ob die Spannmittel die Felge ordnungsgemäß hintergriffen haben.

Vorteilhafterweise wird der erfindungsgemäße Aufsatz 14 mit einem Fahrzeug mit Reifendrucksensor kombiniert.

Ein typischer Ablauf kann beispielsweise wie folgt sein: Ein schadhafter Reifen wird über den geringen Druck durch einen Reifendrucksensor erkannt.

Nach Fahrzeugstillstand und anschließendem Anbringen eines Aufsatzes 14 bzw. des ersten umfänglichen Segments 28, (wie bspw. in Figur 5 gezeigt, im eingeklappten Zustand), wird die Ausgangsposition des betroffenen Fahrzeugrades 1 festgehalten.

Beim Anfahren, zur Positionierung des zweiten umfänglichen Segments 30, wird vorzugsweise über den Drehzahlsensor eine halbe Radumdrehung ermittelt und durch ein, vorzugsweise optisches und/oder akustisches, Signal dem Fahrzeugführer mitgeteilt. Die Kontaktabschnitte 20 des ersten umfänglichen Segments 28 haben dann die Fahrbahn F kontaktiert und die Spannmittel 24 sind im Hintergriff mit dem Felgenhorn 10.

Im Anschluß kann dann die Montage des Aufsatzes abgeschlossen werden, indem das zweite umfängliche Segment 30 in seine endgültige Position gebracht wird und das Fahrzeug weiter gefahren wird, sodass auch dessen Kontaktabschnitte 20 mit der Fahrbahn F in Kontakt kommen.

Über Sensoreinrichtungen wird der korrekte Hintergriff der Spannmittel 24 erfasst und ein entsprechendes Signal an den Fahrzeugführer abgegeben.

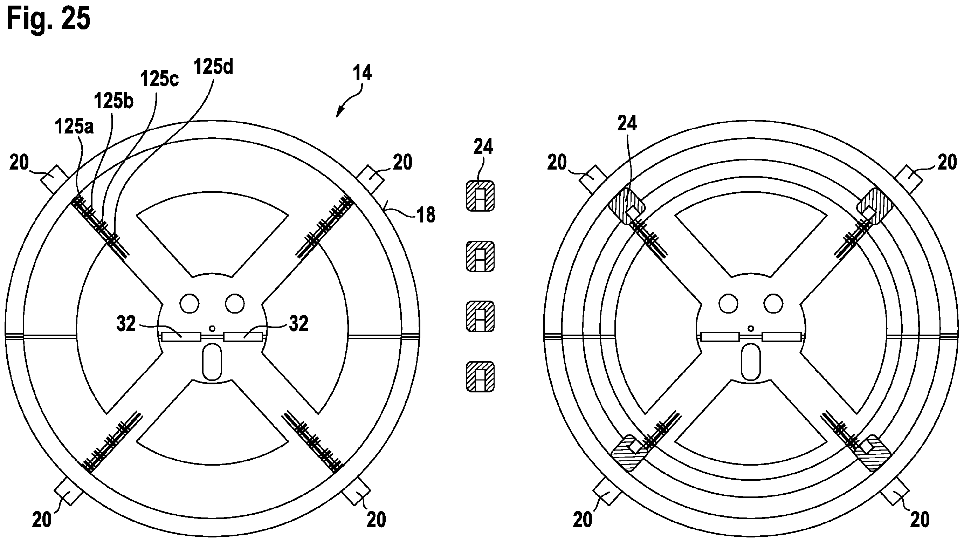

Denkbar ist auch, dass die Spannmittel 24 in verschiedenen, insbesondere radial, zueinander versetzten Positionen 125 am Aufsatz 14 befestigbar sind, sodass der Aufsatz 14 auf verschiedene Felgengrößen anpassbar ist. Dabei ist der Aufsatz 14 vorzugweise derart ausgebildet, dass die Spannmittel 24 in jeder der Positionen, in der sie am Aufsatz 14 anbringbar sind, mit den jeweiligen Kontaktabschnitten 20 koppelbar sind. Ein derartiger Aufsatzes 14 ist in Figur 25 gezeigt. In Figur 25 links sind vier verschiedene radial zueinander versetzte Positionen, in den eine Anbringung der Spannmittel 24 vorliegend möglich ist, über die Bezugszeichen 125a bis 125d gekennzeichnet. In der rechten Darstellung von Figur 25 sind die Spannmittel 24 in der jeweils radial äußersten Position 125a angebracht. Der Aufsatz 14 ist dabei vorzugweise derart ausgeführt, dass die Spannmittel 24 beim Anbringen in den Position 125a bis 125d jeweils automatisch mit den ihnen zugeordneten Kontaktabschnitten 20 koppeln.

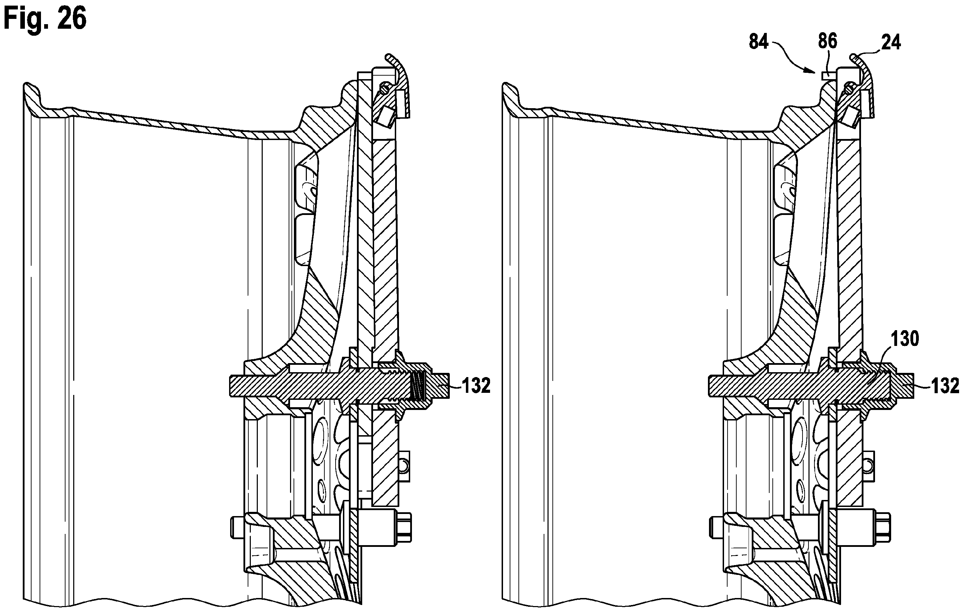

Wie in Figur 26 gezeigt, so ist es auch möglich den Aufsatz 14 über Spezialbolzen 130 am Fahrzeugrad 1 anzubringen, wobei die Spezialbolzen 130 derart ausgebildet sind, dass sie eine herkömmliche Radschrauben 94 ersetzen und so lang sind, dass der Aufsatz 14 mittels entsprechender Muttern 132 am Fahrzeugrad 1 anbringbar ist. Die Spannmittel 24 können dann beispielsweise gesondert betätigbar ausgebildet sein.

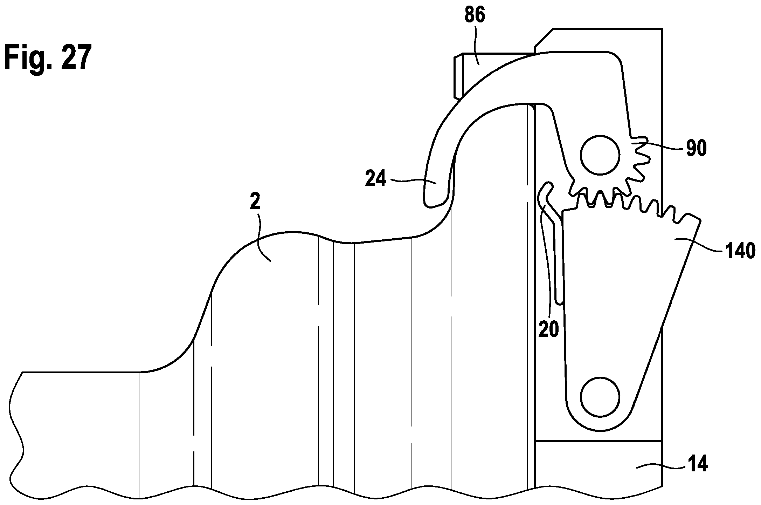

Figur 27 zeigt eine weitere alternative Ausführungsform des Aufsatzes 14, bei der der Kontaktabschnitt 20 auf der der Felge 2 zugewandten Seite des Aufsatzes 14 angeordnet ist und über ein Zahnradsegment 140 mit einer Verzahnung 90 der Spannmittel 20 gekoppelt ist.

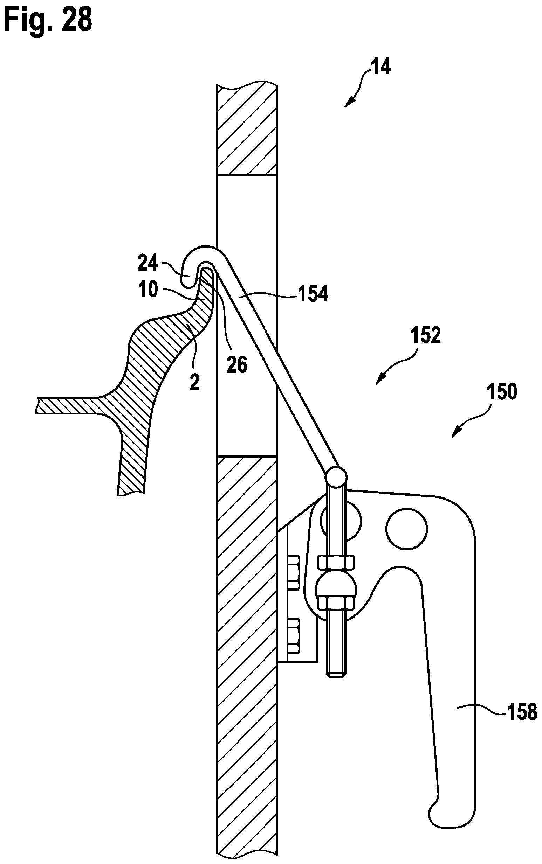

Figur 28 zeigt eine Ausführungsform eines nicht zum Umfang der beanspruchten Erfindung gehörenden Aufsatzes 14 bei dem statt dem Verspannmechanismus 22 mit dem Kontaktabschnitt 20 eine Betätigungseinrichtung 150 für die jeweiligen Spannmittel 24 vorgesehen ist, mit der das Spannmittel 24 in Hintergriff mit dem Abschnitt 11 der Felge 2, vorzugsweise dem Felgenhorn 10 bringbar ist. Die Betätigungseinrichtung 150 ist in Form eines Hebelmechanismus 152, vorliegend mit einem Hebelarm 154, an dem das Spannmittel 24 angeordnet ist, der beispielsweise manuell über einen Handgriff 158, der Teil der Betätigungseinrichtung 150 ist, bedienbar ist, ausgebildet.

Möglich wäre dann auch, wenn das oder die Spannmittel 24 statt dem oder zusätzlich zu dem Handgriff 158 eine Ansatzeinrichtung (nicht gezeigt) aufweisen, über die ein Hebel an das Spannmittel 24 angesetzt werden kann, sodass das Spannmittel 24 über diesen Hebel auf den Abschnitt 11 der Felge 2, vorzugsweise das Felgenhorn 10, bewegbar oder schwenkbar ist. Ein derartiger Hebel kann die eben genannte Betätigungseinrichtung 150 bilden.

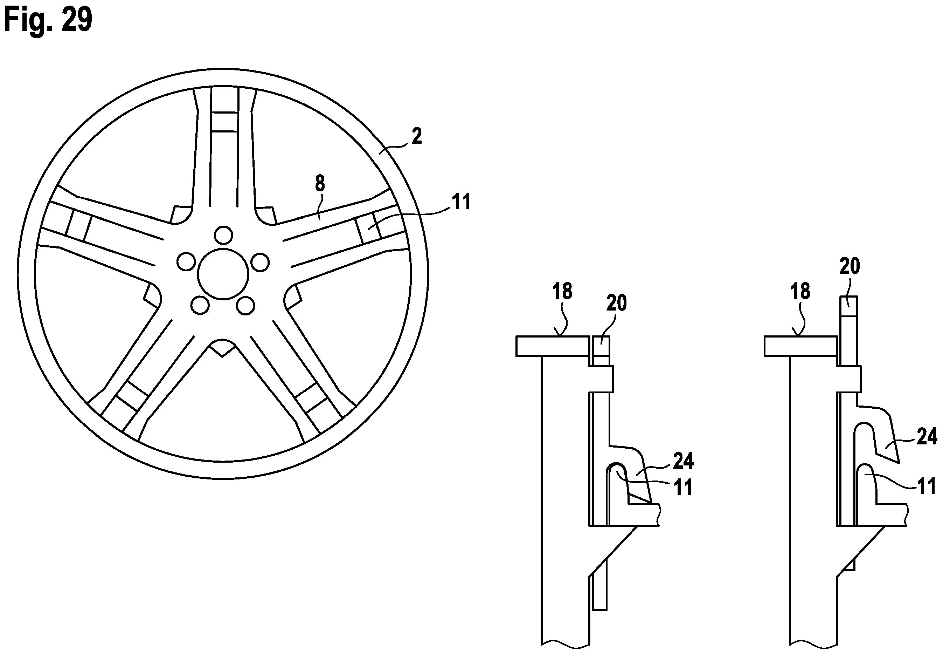

In Figur 29 ist schematisch ein Abschnitt 11 der Felge 2 illustriert, der von den Spannmitteln des Aufsatzes hintergriffen werden kann, wobei der Abschnitt 11 sich vom Felgenhorn 10 unterscheidet. Abschnitt 11 ist in den Speichen 8 der Felge 2 ausgebildet.

## Patentansprüche

1. Aufsatz (14) für ein Fahrzeugrad (1) zur Ermöglichung eines Fahrbetriebs bei eingeschränkter Reifenfunktion mit einem Grundkörper (16), der eine Lauffläche (18) zur Kontaktierung einer Fahrbahn (F) und wenigstens ein Spannmittel (24) aufweist, das dazu ausgebildet ist, mit einem Hakabschnitt (26) einen Abschnitt (10, 11) einer Felge (2) des Fahrzeugrads (1) zu hintergreifen, wobei der Aufsatz (14) einen Verspannmechanismus (22) mit einem Kontaktabschnitt (20) umfasst, der dazu ausgebildet ist, das Spannmittel (24) zu betätigen und den Hakabschnitt (26) in Hintergriff mit dem Abschnitt (10, 11) der Felge (2) zu bringen, wenn der Kontaktabschnitt (20) betätigt wird, **dadurch gekennzeichnet, dass** der Verspannmechanismus (22) dazu ausgebildet ist, mit dem Kontaktabschnitt (20) bei am Fahrzeugrad (1) angebrachtem Aufsatz (14) und sich drehendem Fahrzeugrad (1) die Fahrbahn (F) zu kontaktieren und dadurch den Kontaktabschnitt (20) zu betätigen, oder mit dem Kontaktabschnitt (20) die Felge (2) zu kontaktieren, wenn der Aufsatz am Fahrzeugrad (1) angebracht wird, und dadurch den Kontaktabschnitt (20) zu betätigen.

2. Aufsatz (14) nach Anspruch 1, **dadurch gekennzeichnet, dass** der Kontaktabschnitt (20) räumlich, insbesondere in axialer Richtung gesehen, in der Lauffläche (18) des Aufsatzes (14) angeordnet ist und vorzugsweise wobei der Kontaktabschnitt (20) in einem ausgefahrenen Zustand in Umfangsrichtung (U) absatzfrei mit der Lauffläche (18) des Aufsatzes (14) verläuft.

3. Aufsatz (14) nach Anspruch 1, **dadurch gekennzeichnet, dass** der Kontaktabschnitt (20) auf der der Felge (2) zugewandten Seite des Aufsatzes (14) angeordnet ist.

4. Aufsatz (14) nach einem oder mehreren der vorhergehenden Ansprüche, **dadurch gekennzeichnet, dass** der Verspannmechanismus (22) eine Freilaufeinrichtung (36) umfasst, wobei die Freilaufeinrichtung (36) dazu ausgebildet ist, eine freie Bewegung des Kontaktabschnitts (20) zu ermöglichen, wenn der Hakabschnitt (26) in Hintergriff mit dem Abschnitt (10, 11) der Felge (2) steht.

5. Aufsatz (14) nach einem oder mehreren der vorhergehenden Ansprüche, **dadurch gekennzeichnet, dass** der Verspannmechanismus (22) derart ausgebildet ist, dass das Spannmittel gegen den Abschnitt (10, 11) der Felge (2) vorgespannt, insbe-sondere federvorgespannt, ist und durch ein Rückhalteelement (66) gehalten ist, welches das Spannmittel (24) freigibt, sodass das Spannmittel (24) sich aufgrund der Vorspannung auf die Felge (2), insbesondere den Abschnitt (10, 11) der Felge (2), hin bewegt, insbesondere der Hakabschnitt (26) den Abschnitt (10, 11) der Felge (2) hintergreift, wenn der Kontaktabschnitt (20) betätigt, insbesondere mit Druck beaufschlagt, wird.

6. Aufsatz (14) nach einem oder mehreren der vorhergehenden Ansprüche, **dadurch gekennzeichnet, dass** das Spannmittel (24) über eine Druckbegrenzungseinrichtung (52) mit dem Verspannmechanismus (22) gekoppelt ist, wobei die Druckbegrenzungseinrichtung (52) einen Druck, mit dem das Spannmittel (24) zur Felge (2) hin gedrängt wird und/oder mit dem das Spannmittel (24) die Felge (2) kontaktiert, auf einen Grenzdruck begrenzt.

7. Aufsatz (14) nach einem oder mehreren der vorhergehenden Ansprüche, **dadurch gekennzeichnet, dass** der Verspannmechanismus (22) einen Haltemechanismus (47) umfasst, der dazu ausgebildet ist, das Spannmittel (24) in seiner Position zu halten, wenn das Spannmittel (24) mit seinem Hakabschnitt (26) in Hintergriff mit dem Abschnitt (10, 11) der Felge (2).

8. Aufsatz (14) nach einem oder mehreren der vorhergehenden Ansprüche, **dadurch gekennzeichnet, dass** das Spannmittel (24) einen maximalen möglichen Verfahrweg aufweist, der mehr als einen Zoll beträgt.

9. Aufsatz (14) nach einem oder mehreren der vorhergehenden Ansprüche, **dadurch gekennzeichnet, dass** der Aufsatz (14) ein erstes Umfangssegment (28), vorzugsweise mit einer Umfangserstreckung von mehr als 180°, insbesondere von mehr als 190°, und ein zweites Umfangssegment (30) umfasst, wobei das zweite Umfangssegment (30) mit dem ersten Umfangssegment (28) lösbar und/oder verschwenkbar, vorzugsweise über eine Scharniereinrichtung (32), insbesondere zwei, vorzugsweise an gegenüberliegenden Enden des ersten Umfangssegments (28) angeordneten, Scharniereinrichtungen (32), und/oder verschieblich verbunden ist.

10. Aufsatz (14) nach einem oder mehreren der Ansprüche 1 bis 7, **dadurch gekennzeichnet, dass** der Grundkörper (16) einen in Umfangsrichtung (U) geschlossen ausgebildeten Montageabschnitt (76) und einen Laufflächenabschnitt (78) umfasst, wobei der Laufflächenabschnitt (78) in Umfangsrichtung (U) mit einer Unterbrechung (80) ausgebildet ist und einen in der Unterbrechung (80) aufnehmbaren Einsatzabschnitt (82) umfasst, der in der Unterbrechung (80) derart aufnehmbar ist, dass der Laufflächenabschnitt (78) die Lauffläche (18) bildet.

11. Aufsatz (14) nach dem Anspruch 10, **dadurch gekennzeichnet, dass** der Einsatzabschnitt (82) von dem Laufflächenabschnitt (78) lösbar ist und/oder verschwenkbar oder verschiebbar mit dem Laufflächenabschnitt (78) verbunden ist

12. Aufsatz (14) nach dem Anspruch 11, **dadurch gekennzeichnet, dass** der Laufflächenabschnitt (78) bis auf den Einsatzabschnitt (82) einstückig mit dem Montageabschnitt (76) ausgebildet ist.

13. Aufsatz (14) nach einem oder mehreren der vorhergehenden Ansprüche, **dadurch gekennzeichnet, dass** der Aufsatz (14) eine Anbringeinrichtung (54) umfasst, die dazu ausgebildet ist, den Aufsatz (14) am Fahrzeugrad (1) anzubringen.

14. Aufsatz (14) nach dem Anspruch 13, **dadurch gekennzeichnet, dass** die Anbringeinrichtung (54) dazu ausgebildet ist, den Aufsatz (14) im Bereich des Lochkreises (4) des Fahrzeugrads (1) anzubringen, vorzugsweise wobei die Anbringeinrichtung (54) ein Eingriffselement, das dazu ausgebildet ist, einen Abschnitt (12), vorzugsweise eine Nut (12), einer Mittenöffnung (6) formschlüssig zu hintergreifen, und/oder eine Schraubverbindung, die dazu ausgebildet ist, den Aufsatz (14) an dem Lochkreis (4) anzubringen, und/oder eine Einrichtung zum Hintergriff einer Speiche der Felge (2) umfasst.

15. Aufsatz (14) nach Anspruch 13 oder 14, **dadurch gekennzeichnet, dass** die Anbringeinrichtung (54) eine Einrichtung (93) zum klemmenden und/oder hintergreifenden Erfassen einer, vorzugsweise herkömmlichen, Radschraube (94) umfasst, vorzugsweise wobei die Einrichtung (93) eine Klemmhaube (98) mit wenigstens zwei Klemmarmen (100) umfasst und eine Klemmhülse (102) umfasst, die dann, wenn sie auf die Klemmhaube (98) aufgeschoben wird, die Klemmarme (100) derart aufeinander zu spannt, dass ein Kopf (96) einer Radschraube (94) durch die Klemmarme (100) greifbar ist, und einen Bolzen (104) umfasst, mit dem die Klemmhülse (102) gegen die Klemmhaube (98) spannbar ist.

16. Aufsatz (14) nach einem oder mehreren der vorhergehenden Ansprüche, **dadurch gekennzeichnet, dass** der Aufsatz (14) mehrere, vorzugsweise in einer Umfangsrichtung (U) verteilt angeordnete, Spannmittel (24) umfasst, vorzugsweise wobei der Aufsatz (14) entweder mehrere Kontaktabschnitte (20) umfasst, die jeweils zur Betätigung eines Spannmittels (24) ausgebildet sind, oder ein Kontaktabschnitt (20) zur Betätigung mehrerer Spannmittel (24) ausgebildet ist.

17. Aufsatz (14) nach einem oder mehreren der vorhergehenden Ansprüche, **dadurch gekennzeichnet, dass** der Hakabschnitt (26) des Spannmittels (24) in axialer Richtung (A) gesehen nach radial innen, vorzugsweise linear oder bogenförmig, abfallend ausgebildet ist, wobei das Spannmittel (24) derart ausgebildet ist, dass sich der Hakabschnitt (26) nach radial innen bewegt, insbesondere verschiebt, wenn das Spannmittel (24) über den Kontaktabschnitt (20) betätigt wird und das Spannmittel (24) sich auf die Felge (2), insbesondere auf ein Felgenhorn (10), zubewegt, und dass durch die Bewegung des Hakabschnitts (26) der Aufsatz (14) in axialer Richtung (A) zur Felge (2) hin gedrängt wird.

18. Aufsatz (14) nach einem oder mehreren der vorhergehenden Ansprüche, **dadurch gekennzeichnet, dass** der Aufsatz (14) eine Reifenverdrängeinrichtung (84) umfasst, die dazu ausgebildet ist, den Reifen (3) beim Anbringen des Aufsatzes (14) und/oder beim Betätigen des Spannmittels (24) in axialer Richtung (A) von einem Felgenhorn (10) weg zu drängen, vorzugsweise wobei die Reifenverdrängeinrichtung (84) einem Spannmittel (24) bzw. mehreren Spannmitteln (24) jeweils eine Reifenverdrängeinrichtung (84) zugeordnet ist.

19. Aufsatz (14) nach dem Anspruch 18, **dadurch gekennzeichnet**, **dadurch gekennzeichnet, dass** die Reifenverdrängeinrichtung (84) gesondert von dem Spannmittel (24) ausgebildet ist.

20. Aufsatz (14) nach Anspruch 18 oder 19, dass die Reifenverdrängeinrichtung (84) einen Vorsprung (86), vorzugsweise zwei Vorsprünge (86), umfasst, der in axialer Richtung (A) von der der Felge (2) zugewandten Seite des Aufsatzes (14) abragt und insbesondere stab- oder bogenartig ausgebildet ist.

21. Aufsatz (14) nach dem Anspruch 20, **dadurch gekennzeichnet, dass** der Vorsprung (86) sich beim oder nach dem Hintergreifen des Abschnitts (10) der Felge (2), vorzugsweise des Felgenhorns (10), durch das Spannmittel (24) von dem Reifen (3) wegbewegt.

## Claims

1. An attachment (14) for a vehicle wheel (1) for allowing a driving operation with limited tire function, including a base body (16) having a tread surface (18) for contacting a road surface (F) and at least one bracing means (24) which is configured to engage with a hook portion (26) behind a portion (10, 11) of a rim (2) of the vehicle wheel (1), wherein the attachment (14) comprises a bracing mechanism (22) having a contact portion (20) which is configured to actuate the bracing means (24) and to bring the hook portion (26) into engagement behind the portion (10, 11) of the rim (2), when the contact portion (20) is actuated, **characterized in that** the bracing mechanism (22) is configured to contact the road surface (F) with the contact portion (20) when the attachment (14) is attached to the vehicle wheel (1) and the vehicle wheel (1) is rotating, and thereby to actuate the contact portion (20), or to contact the rim (2) with the contact portion (20) when the attachment is attached to the vehicle wheel (1) and thereby to actuate the contact portion (20).

2. The attachment (14) as claimed in claim 1, **characterized in that** the contact portion (20) is arranged spatially, in particular when seen in the axial direction, in the tread surface (18) of the attachment (14), and preferably wherein the contact portion (20) in a deployed state extends in the peripheral direction (U) flush with the tread surface (18) of the attachment (14).

3. The attachment (14) as claimed in claim 1, **characterized in that** the contact portion (20) is arranged on the side of the attachment (14) that faces the rim (2).

4. The attachment (14) as claimed in one or more of the preceding claims, **characterized in that** the bracing mechanism (22) comprises a freewheel device (36), wherein the freewheel device (36) is configured to permit a free movement of the contact portion (20) when the hook portion (26) is in engagement behind the portion (10, 11) of the rim (2).

5. The attachment (14) as claimed in one or more of the preceding claims, **characterized in that** the bracing mechanism (22) is so configured that the bracing means is biased, in particular spring-biased, towards the portion (10, 11) of the rim (2) and is held by a retaining element (66) which releases the bracing means (24) so that the bracing means (24) moves, as a result of the biasing, towards the rim (2), in particular the portion (10, 11) of the rim (2), in particular the hook portion (26) engages behind the portion (10, 11) of the rim (2) when the contact portion (22) is actuated, in particular subjected to pressure.

6. The attachment (14) as claimed in one or more of the preceding claims, **characterized in that** the bracing means (24) is coupled with the bracing mechanism (22) *via* a pressure limiting device (52), wherein the pressure limiting device (52) limits a pressure with which the bracing means (24) is urged towards the rim (2) and/or with which the bracing means (24) contacts the rim (2) to a limit pressure.

7. The attachment (14) as claimed in one or more of the preceding claims, **characterized in that** the bracing mechanism (22) comprises a holding mechanism (47) which is configured to hold the bracing means (24) in its position when the bracing means (24) is in engagement behind the portion (10, 11) of the rim (2) with its hook portion (26).

8. The attachment (14) as claimed in one or more of the preceding claims, **characterized in that** the bracing means (24) has a maximum possible travel, which is more than one inch.

9. The attachment (14) as claimed in one or more of the preceding claims, **characterized in that** the attachment (14) comprises a first peripheral segment (28), preferably having a peripheral extent of more than 180°, in particular of more than 190°, and a second peripheral segment (30), wherein the second peripheral segment (30) is connected to the first peripheral segment (28) in a detachable and/or pivotable manner, preferably *via* a hinge device (32), in particular two hinge devices (32), preferably arranged at opposite ends of the first peripheral segment (28), and/or in a displaceable manner.

10. The attachment (14) as claimed in one or more of the preceding claims 1 to 7, **characterized in that** the base body (16) comprises a mounting portion (76), which is closed in the peripheral direction (U), and a tread portion (78), wherein the tread portion (78) is configured in the peripheral direction (U) with a gap (80) and comprises an insert portion (82) which can be received in the gap (80), which insert portion is adapted to be received in the gap (80) in such a manner that the tread portion (78) forms the tread surface (18).

11. The attachment (14) as claimed in claim 10, **characterized in that** the insert portion (82) is detachable from the tread portion (78) and/or is pivotably or displaceably connected to the tread portion (78).

12. The attachment (10) as claimed in claim 11, **characterized in that** the tread portion (78), apart from the insert portion (82), is integrally formed with the mounting portion (76).

13. The attachment (14) as claimed in one or more of the preceding claims, **characterized in that** the attachment (14) comprises an attachment device (54) which is configured to attach the attachment (14) to the vehicle wheel (1).

14. The attachment (14) as claimed in claim 13, **characterized in that** the attachment device (54) is configured to attach the attachment (14) in the region of the bolt circle (4) of the vehicle wheel (1), preferably wherein the attachment device (54) comprises an engagement element which is configured to engage in a form-fitting manner behind a portion (12), preferably a groove (12), of a center opening (6), and/or comprises a screw connection which is configured to attach the attachment (14) to the bolt circle (4), and/or comprises a device for engaging behind a spoke of the rim (2).

15. The attachment (14) as claimed in claim 13 or 14, **characterized in that** the attachment device (54) comprises a device (93) for gripping a wheel bolt (94), preferably a conventional wheel bolt, by clamping and/or engaging behind it, preferably wherein the device (93) comprises a clamping cap (98) having at least two clamping arms (100) and comprises a clamping sleeve (102) which, when it is pushed onto the clamping cap (98), biases the clamping arms (100) towards one another in such a manner that a head (96) of a wheel bolt (94) can be gripped by the clamping arms (100), and comprises a bolt (104) with which the clamping sleeve (102) can be clamped against the clamping cap (98).

16. The attachment (14) as claimed in one or more of the preceding claims, **characterized in that** the attachment (14) comprises a plurality of bracing means (24) which are preferably distributed in a peripheral direction (U), preferably wherein either the attachment (14) comprises a plurality of contact portions (20) which are each configured to actuate a bracing means (24), or one contact portion (20) is configured to actuate a plurality of bracing means (24).

17. The attachment (14) as claimed in one or more of the preceding claims, **characterized in that** the hook portion (26) of the bracing means (24), when seen in the axial direction (A), is configured to slope radially inwards, preferably in a linear or curved manner, wherein the bracing means (24) is so configured that the hook portion (26) moves, in particular is displaced, radially inwards when the bracing means (24) is actuated *via* the contact portion (20) and the bracing means (24) moves towards the rim (2), in particular towards a rim flange (10), and wherein, by the movement of the hook portion (26), the attachment (14) is urged in the axial direction (A) towards the rim (2).

18. The attachment (14) as claimed in one or more of the preceding claims, **characterized in that** the attachment (14) comprises a tire displacement device (84) which is configured to displace the tire (3) away from a rim flange (10) in the axial direction (A) on attachment of the attachment (14) and/or on actuation of the bracing means (24), preferably wherein the tire displacement device (84) is associated with a bracing means (24) or a tire displacement device (84) is associated with each of a plurality of bracing means (24).

19. The attachment (14) as claimed in claim 18, **characterized in that** the tire displacement device (84) is formed separately from the bracing means (24).

20. The attachment (14) as claimed in claim 18 or 19, **characterized in that** the tire displacement device (84) comprises a projection (86), preferably two projections (86), which protrudes in the axial direction (A) from the side of the attachment (14) that faces the rim (2) and in particular is rod-shaped or curved.

21. The attachment (14) as claimed in claim 20, **characterized in that** the projection (86) moves away from the tire (3) on or after engagement of the bracing means (24) behind the portion (10) of the rim (2), preferably the rim flange (10).

## Revendications

1. Elément rapporté (14) destiné à être monté sur une roue de véhicule (1) pour permettre un roulage en cas de fonctionnement limité d'un pneu, comprenant un corps de base (16) qui présente une surface roulement (18) destinée à entrer en contact avec la chaussée (F) et au moins un moyen de serrage (24) conçu pour s'engager à l'aide d'une partie crochet (26) derrière une partie (10,11) d'une jante (2) de la roue de véhicule (1), l'élément rapporté (14) comportant un mécanisme de serrage (22) pourvu d'un segment de contact (20) conçu pour actionner le moyen de serrage (24) et amener la partie crochet (26) en prise, par l'arrière, avec ladite partie (10, 11) de la jante (2) lorsque le segment de contact (20) est actionné, **caractérisé en ce que** le mécanisme de serrage (22) est conçu pour entrer en contact avec la chaussée (F) par le biais du segment de contact (20) lorsque l'élément rapporté (14) est monté sur la roue de véhicule (1) et la roue de véhicule (1) tourne, et actionner ainsi le segment de contact (20) ou entrer en contact avec la jante (2) par le biais du segment de contact (20) lorsque l'élément rapporté est monté sur la roue de véhicule (1) et actionner ainsi le segment de contact (20).

2. Elément rapporté (14) selon la revendication 1, **caractérisé en ce que** le segment de contact (20) est, vu dans l'espace, en particulier dans la direction axiale, disposé dans la surface de roulement (18) de l'élément rapporté (14), étant précisé que, d'une manière préférentielle, le segment de contact (20) à l'état non actionné s'étend sans redan sur la surface de roulement (18) de l'élément rapporté (14), dans la direction circonférentielle (U).

3. Elément rapporté (14) selon la revendication 1, **caractérisé en ce que** le segment de contact (20) est disposé sur le côté de l'élément rapporté (14) tourné vers la jante (2).

4. Elément rapporté (14) selon l'une ou plusieurs des revendications précédentes, **caractérisé en ce que** le mécanisme de serrage (22) comporte un dispositif roue libre (36) lequel est conçu pour permettre au segment de contact (20) de se mouvoir librement lorsque la partie crochet (26) est engagée derrière la partie (10, 11) de la jante (2).

5. Elément rapporté (14) selon l'une ou plusieurs des revendications précédentes, **caractérisé en ce que** le mécanisme de serrage (22) est conçu de telle sorte que le moyen de serrage est précontraint, notamment par ressort, contre la partie (10, 11) de la jante (2), et maintenu à l'aide d'un élément de retenue (66) qui libère le moyen de serrage (24), si bien que le moyen de serrage (24) se déplace sous l'effet de la précontrainte vers la jante (2), plus particulièrement vers la partie (10, 11) de la jante (2), notamment la partie crochet (26) s'engage derrière la partie (10, 11) de la jante (2) lorsque le segment de contact (20) est actionné, notamment lorsqu'il est soumis à une pression.

6. Elément rapporté (14) selon l'une ou plusieurs des revendications précédentes, **caractérisé en ce que** le moyen de serrage (24) est couplé au mécanisme de serrage (22) par le biais d'un dispositif de limitation de pression (52), ce dispositif de limitation de pression (52) limitant à une pression limite une pression sous l'effet de laquelle le moyen de serrage (24) est poussé vers la jante (2) et/ou le moyen de serrage (24) entre en contact avec la jante (2).

7. Elément rapporté (14) selon l'une ou plusieurs des revendications précédentes, **caractérisé en ce que** le mécanisme de serrage (22) comporte un mécanisme de maintien (47) qui est conçu pour maintenir le moyen de serrage (24) dans sa position lorsque le moyen de serrage (24) est engagé derrière la partie (10, 11) de la jante (2) par le biais de sa partie crochet (26).

8. Elément rapporté (14) selon l'une ou plusieurs des revendications précédentes, **caractérisé en ce que** le moyen de serrage (24) présente une course de déplacement maximale possible de plus de 1 pouce.

9. Elément rapporté (14) selon l'une ou plusieurs des revendications précédentes, **caractérisé en ce que** l'élément rapporté (14) comporte un premier segment circonférentiel (28), préférentiellement avec une étendue circonférentielle de plus de 180°, plus particulièrement de plus de 190°, et un deuxième segment circonférentiel (30), ce deuxième segment circonférentiel (30) étant relié de manière amovible et/ou pivotante au premier segment circonférentiel (28), préférentiellement par l'intermédiaire d'un dispositif de charnière, en particulier de deux dispositifs de charnière (32) préférentiellement disposés aux extrémités opposées du premier segment circonférentiel (28), et/ou de manière coulissante.

10. Elément rapporté (14) selon l'une ou plusieurs des revendications précédentes, **caractérisé en ce que** le corps de base (16) comporte une partie de montage (76) conçue fermée dans la direction circonférentielle (U) et une partie de surface de roulement (78), cette dernière étant conçue dans la direction circonférentielle avec une discontinuité (80) et comportant une partie d'insert (82) qui peut être logée de telle sorte dans la discontinuité (80) que la partie de surface de roulement (78) forme la surface de roulement (18).

11. Elément rapporté (14) selon la revendication 10, **caractérisé en ce que** la partie d'insert (82) peut être démontée de la partie de surface de roulement (78) et/ou reliée de manière pivotante ou coulissante à la partie de surface de roulement (78).

12. Elément rapporté (14) selon la revendication 11, **caractérisé en ce que** la partie de surface de roulement (78), excepté la partie d'insert (82), est conçue d'un seul tenant avec la partie de montage (76).

13. Elément rapporté (14) selon l'une ou plusieurs des revendications précédentes, **caractérisé en ce que** l'élément rapporté (14) comporte un dispositif de fixation (54) qui est conçu pour fixer l'élément rapporté (14) sur la roue de véhicule (1).

14. Elément rapporté (14) selon la revendication 13, **caractérisé en ce que** le dispositif de fixation (54) est conçu pour permettre la fixation de l'élément rapporté (14) dans la zone du cercle de trous (4) de la roue de véhicule (1), étant précisé que d'une manière préférentielle, le dispositif de fixation (54) comporte un élément de préhension conçu pour venir s'engager par complémentarité de formes dans une partie (12), de préférence une rainure (12), d'une ouverture médiane (6) et/ou une liaison par vis conçue pour permettre la fixation de l'élément rapporté (14) sur le cercle de trous (4) et/ou un dispositif pour venir en prise par derrière avec un rayon de la jante (2).

15. Elément rapporté (14) selon la revendication 13 ou 14, **caractérisé en ce que** le dispositif de fixation (54) comporte un dispositif (93) permettant la saisie par serrage ou la saisie par derrière d'une vis de roue (94) de type préférentiellement courant, étant précisé que d'une manière préférentielle, le dispositif (93) comporte une coiffe de serrage (98) pourvue au moins de deux bras de serrage (100) et une douille de serrage (102) qui, une fois enfilée sur la coiffe de serrage (98), resserre les bras de serrage (100) l'un vers l'autre de sorte qu'une tête (96) d'une vis de roue (94) peut être saisie par les bras de serrage (100), ainsi qu'un boulon (104) au moyen duquel la douille de serrage (102) peut être serrée contre la coiffe de serrage (98).

16. Elément rapporté (14) selon l'une ou plusieurs des revendications précédentes, **caractérisé en ce que** l'élément rapporté (14) comprend plusieurs moyens de serrage (24) préférentiellement disposés répartis dans une direction circonférentielle (U), étant précisé que d'une manière préférentielle, l'élément rapporté (14) comporte soit plusieurs segments de contact (20) conçus pour actionner chacun un moyen de serrage (24) soit un segment de contact (20) conçu pour actionner plusieurs moyens de serrage (24).

17. Elément rapporté (14) selon l'une ou plusieurs des revendications précédentes, **caractérisé en ce que** la partie crochet (26) du moyen de serrage (24), vue dans la direction axiale (A), est conçue descendante radialement vers l'intérieur, de préférence linéairement ou en forme d'arc, le moyen de serrage (24) étant conçu de telle sorte que la partie crochet (26) se déplace radialement vers l'intérieur, notamment lorsque le moyen de serrage (24) est actionné par l'intermédiaire du segment de contact (20) et le moyen de serrage (24) se déplace en direction de la jante (2), notamment d'un rebord de jante (10), et **en ce que** du fait du déplacement de la partie crochet (26), l'élément rapporté (14) est poussé dans la direction radiale (A) vers la jante (2).

18. Elément rapporté (14) selon l'une ou plusieurs des revendications précédentes, **caractérisé en ce que** l'élément rapporté (14) comporte un dispositif de refoulement de pneu (84) qui est conçu pour repousser dans la direction axiale (A) le pneu (3) pour l'éloigner d'un rebord de jante (10) lors du montage de l'élément rapporté (14) et/ou de l'actionnement du moyen de serrage (24), étant précisé que d'une manière préférentielle, le dispositif de refoulement de pneu (84) est respectivement associé à un moyen de serrage (24) ou à plusieurs moyens de serrage.

19. Elément rapporté (14) selon la revendication 18, **caractérisé en ce que** le dispositif de refoulement de pneu (84) est conçu séparément du moyen de serrage (24).

20. Elément rapporté (14) selon la revendication 18 ou 19, **caractérisé en ce que** le dispositif de refoulement de pneu (84) comporte une saillie (86), préférentiellement deux saillies (86), qui font saillie dans la direction axiale (A) du côté de l'élément rapporté (14) tourné vers la jante (2) et sont conçus en particulier sous forme de tige ou d'arc.

21. Elément rapporté (14) selon la revendication 20, **caractérisé en ce que** la saillie (86) s'éloigne du pneu (3) pendant ou après que le moyen de serrage (24) vient en prise par derrière avec la partie (10) de la jante (2), en particulier le rebord de jante (10).
